# EUROPÄISCHE PATENTSCHRIFT

(11) **EP 2 208 775 B1**
(45) Veröffentlichungstag und Bekanntmachung des Hinweises auf die Patenterteilung: **25.07.2012**
(21) Anmeldenummer: 10000235.1
(22) Anmeldetag: 12.01.2010
(51) Int. Cl.: C09K 19/30, C09K 19/42, C09K 19/44

(54) **Flüssigkristallverbindungen und FK-Medien**
Liquid crystalline compound and liquid crystalline medium
Composé liquide cristallin et milieu liquide cristallin

(30) Priorität: 20.01.2009 DE 102009005191
(43) Veröffentlichungstag der Anmeldung: 21.07.2010
(73) Patentinhaber: Merck Patent GmbH, 64293 Darmstadt (DE)
(72) Erfinder: Jansen, Axel, Dr., 64293 Darmstadt (DE); Pauluth, Detlef, Dr., 64372 Ober-Ramstadt (DE); Fiebranz, Bernd, 64839 Münster (DE); Rieger, Bernhard, Dr., 64839 Münster (DE)

(56) Entgegenhaltungen:
- EP-A1- 0 816 332
- EP-A2- 0 501 268
- DE-A1- 3 246 440
- DE-A1- 4 027 458
- DE-A1- 4 417 441
- US-A- 5 264 149

## Beschreibung

Die vorliegende Erfindung betrifft neue Flüssigkristallverbindungen, Verfahren und Zwischenprodukte zu ihrer Herstellung, ihre Verwendung für optische, elektrooptische und elektronische Zwecke, insbesondere in Flüssigkristall-Medien (FK-Medien) und Flüssigkristall-Anzeigen (FK-Anzeigen), sowie diese enthaltende FK-Medien und FK-Anzeigen.

Flüssige Kristalle werden vor allem als Dielektrika in Anzeigevorrichtungen verwendet, da die optischen Eigenschaften solcher Substanzen durch eine angelegte Spannung beeinflusst werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), Gast/Wirt-Zellen, TN-Zellen mit verdrillt nematischer ("twisted nematic") Struktur, STN-Zellen ("super-twisted nematic"), SBE-Zellen ("superbirefringence effect") und OMI-Zellen ("optical mode interference"). Die gebräuchlichsten Anzeigevorrichtungen beruhen auf dem Schadt-Helfrich-Effekt und besitzen eine verdrillt nematische Struktur. Daneben gibt es auch Zellen, die mit einem elektrischen Feld parallel zur Substrat- und Flüssigkristallebene arbeiten, wie beispielsweise die IPS-Zellen ("in-plane switching"). Vor allem die TN-, STN- und IPS- Zellen, insbesondere die TN-, STN- und IPS-Zellen, sind derzeit kommerziell interessante Einsatzgebiete für die erfindungsgemäßen Medien.

Die Flüssigkristallmaterialien müssen eine gute chemische und thermische Stabilität und eine gute Stabilität gegenüber elektrischen Feldern und elektromagnetischer Strahlung besitzen. Ferner sollten die Flüssigkristallmaterialien niedere Viskosität aufweisen und in den Zellen kurze Ansprechzeiten, tiefe Schwellenspannungen und einen hohen Kontrast ergeben.

Weiterhin sollten sie bei üblichen Betriebstemperaturen, d.h. in einem möglichst breiten Bereich unterhalb und oberhalb Raumtemperatur eine geeignete Mesophase besitzen, beispielsweise für die oben genannten Zellen eine nematische Mesophase. Da Flüssigkristalle in der Regel als Mischungen mehrerer Komponenten zur Anwendung gelangen, ist es wichtig, dass die Komponenten untereinander gut mischbar sind. Weitere Eigenschaften, wie die elektrische Leitfähigkeit, die dielektrische Anisotropie und die optische Anisotropie, müssen je nach Zellentyp und Anwendungsgebiet unterschiedlichen Anforderungen genügen. Beispielsweise sollten Materialien für Zellen mit verdrillt nematischer Struktur eine positive dielektrische Anisotropie und eine geringe elektrische Leitfähigkeit aufweisen.

Beispielsweise sind für Matrix-Flüssigkristallanzeigen mit integrierten nicht-linearen Elementen zur Schaltung einzelner Bildpunkte (MFK-Anzeigen) Medien mit großer positiver dielektrischer Anisotropie, breiten nematischen Phasen, relativ niedriger Doppelbrechung, sehr hohem spezifischen Widerstand, guter UV- und Temperaturstabilität und geringem Dampfdruck erwünscht.

Derartige Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z.B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig, um akzeptable Standzeiten zu erhalten. Insbesondere bei low-volt-Mischungen war es bisher nicht möglich, sehr hohe spezifische Widerstände zu realisieren. Weiterhin ist es wichtig, dass der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, dass auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Für TV- und Videoanwendungen werden MFK-Anzeigen mit geringen Schaltzeiten benötigt. Solche geringen Schaltzeiten lassen sich besonders dann realisieren, wenn Flüssigkristallmedien mit geringen Werten für die Viskosität, insbesondere der Rotationsviskosität γ₁ verwendet werden. Verdünnende Zusätze verringern jedoch in der Regel den Klärpunkt und damit den Arbeitstemperaturbereich des Mediums.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die diese Nachteile nicht oder nur in geringerem Maße zeigen.

Bei TN-(Schadt-Helfrich)-Zellen sind Medien erwünscht, die folgende Vorteile in den Zellen ermöglichen:
- erweiterter nematischer Phasenbereich (insbesondere zu tiefen Temperaturen)
- Schaltbarkeit bei extrem tiefen Temperaturen (out-door-use, Automobil, Avionik)
- erhöhte Beständigkeit gegenüber UV-Strahlung (längere Lebensdauer)
- kleine Schwellenspannung

Mit den aus dem Stand der Technik zur Verfügung stehenden Medien ist es nicht möglich, diese Vorteile unter gleichzeitigem Erhalt der übrigen Parameter zu realisieren.

Bei höher verdrillten Zellen (STN) sind Medien erwünscht, die eine höhere Multiplexierbarkeit und/oder kleinere Schwellenspannungen und/oder breitere nematische Phasenbereiche (insbesondere bei tiefen Temperaturen) ermöglichen. Hierzu ist eine weitere Ausdehnung des zur Verfügung stehenden Parameterraumes (Klärpunkt, Übergang smektisch-nematisch bzw. Schmelzpunkt, Viskosität, dielektrische Größen, elastische Größen) dringend erwünscht.

Bei FK-Anzeigen für TV- und Videoanwendungen (z.B. LCD-TV, Monitore, PDAs, Notebooks, Spielkonsolen) ist eine deutliche Verringerung der Schaltzeiten gewünscht. Es besteht deshalb ein Bedarf an Verbindungen für FK-Medien, die eine Verringerung der Schaltzeiten ermöglichen, ohne gleichzeitig die anderen Eigenschaften des FK-Mediums, wie beispielsweise den Klärpunkt, die dielektrische Anisotropie Δε oder die Doppelbrechung Δn zu verschlechtern. Hierfür sind insbesondere niedrige Rotationsviskositäten wünschenswert.

Bei Anwendungen für FK-Medien mit positiver dielektischer Anisotropie sind generell schnelle Schaltzeiten gefragt. Es ist bekannt, dass eine Verringerung der Schichtdicke d des FK-Mediums in der FK-Zelle theoretisch zu einer Verringerung der Schaltzeiten führt. Deshalb werden hierfür FK-Medien mit höheren Doppelbrechungswerten Δn benötigt, um eine ausreichende optische Verzögerung d Δn zu gewährleisten. Andererseits zeigen jedoch FK-Medien mit höheren Doppelbrechungswerten typischerweise auch höhere Werte der Rotationsviskosität, was wiederum zu längeren Schaltzeiten führt. Die durch Verringerung der Schichtdicke erzielte Verkürzung der Schaltzeit wird somit durch die höhere Rotationsviskosität des verwendeten FK-Mediums zumindest teilweise wieder kompensiert.

Es besteht deshalb ein dringender Bedarf an FK-Verbindungen und FK-Medien, welche gleichzeitig hohe Doppelbrechungswerte und niedrige Rotationsviskositäten aufweisen.

Der Erfindung liegt die Aufgabe zugrunde, FK-Verbindungen und FK-Medien insbesondere für derartige MFK-, TN-, STN- oder IPS-Anzeigen bereitzustellen, welche die oben angegebenen gewünschten Eigenschaften besitzen und die oben angegebenen Nachteile nicht oder nur in geringerem Maße zeigen. Insbesondere sollten die erfindungsgemäßen FK-Verbindungen und FK-Medien schnelle Schaltzeiten und niedrige Rotationsviskositäten bei gleichzeitig hoher dielektrische Anisotropie und hoher Doppelbrechung aufweisen. Darüber hinaus sollten die FK-Medien einen hohen Klärpunkt, einen breiten nematischen Phasenbereich und eine niedrige Schwellenspannung aufweisen.

Es wurde nun gefunden, dass diese Aufgabe gelöst werden kann, wenn man FK-Verbindungen basierend auf Alkinylphenylbicyclohexylderivaten in FK-Medien und FK-Anzeigen, verwendet. Diese Verbindungen führen zu FK-Medien mit den oben angegebenen gewünschten Eigenschaften.

In der DE 32 46 440 A1 werden Alkinylverbindungen der folgenden allgemeinen Formel offenbart 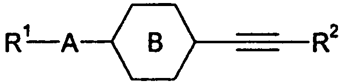 worin B 1,4-Phenylen oder 1,4-Cyclohexan bedeutet und A für eine Gruppe mit 1 bis 3 sechsgliedrigen Ringen steht. R¹ kann u. A. eine geradkettige Alkylgruppe mit 1 bis 9 Kohlenstoffatomen sein. R² ist Wasserstoff, Cyano oder eine geradkettige Alkylgruppe mit 1 bis 7 Kohlenstoffatomen.

Gemäß der DE 32 46 440 A1 besonders bevorzugte Verbindungen sind solche mit nicht mehr als zwei Ringen im Grundgerüst.

Darüber hinaus offenbart die DE 32 46 440 A1 bevorzugte Verbindungen, worin der Ring B mit der Gruppe A z.B. eine zentrale Einheit der folgenden Formel 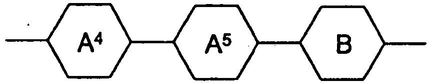 bilden kann, worin einer der Ringe A⁴, A⁵ und B 1,4-Phenylen und die anderen 1,4-Phenylen odertrans-1,4-disubstituiertes Cyclohexan bedeuten. Als bevorzugtes Beispiel werden in der DE 32 46 440 A1 Verbindungen der Unterformel XXVI angeführt 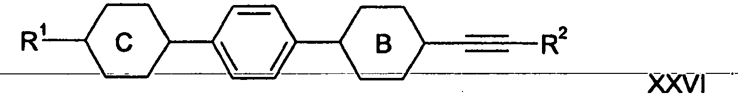 worin die Ringe B und C 1,4-Phenylen oder trans-1,4-disubstituiertes Cyclohexan bedeuten und R¹ und R² die oben angegebene Bedeutung haben. Konkrete Beispiele werden jedoch nicht offenbart.

Ferner offenbart die DE 32 46 440 A1 zahlreichen Nitrilverbindungen, bei denen der Rest R² in der allgemeinen Formel 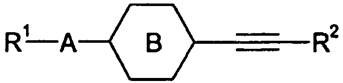 CN bedeutet. Nitrilverbindungen und insbesondere Alkinylnitrilverbindungen sind jedoch für den Einsatz in modernen AM-Displays ungeeignet, da sie zu einer schlechten Voltage Holding Ratio (VHR) und somit zu einer schlechten Reliability der Flüssigkristallmischung führen.

Eine Hauptanforderung an flüssigkristalline Verbindungen ist ein gutes Verhältnis von Rotationsviskosität zu Klärpunkt. Weiterhin werden Einzelverbindungen benötigt, die diese Anforderung mit hohen Absolutwerten für den Klärpunkt kombinieren. Dies kann oft nur von Verbindungen geleistet werden, deren Grundgerüst drei oder mehr cyclische Einheiten aufweist ("Dreikernverbindungen").

In der DE 32 46 440 A1 werden jedoch insbesondere Verbindungen mit zwei cyclischen Einheiten im Grundgerüst bevorzugt. Die dafür angegebenen Beispielverbindungen zeigen keine ausreichend hohen Werte für den absoluten Klärpunkt.

Die wenigen in der DE 32 46 440 A1 aufgeführten Beispiele für sogenannte Dreikernverbindungen haben ebenfalls vergleichsweise niedrige Klärpunkte und zudem schlechte Phaseneigenschaften. So ist z.B. die in DE 32 46 440 A1 offenbarte Verbindung der folgenden Formel 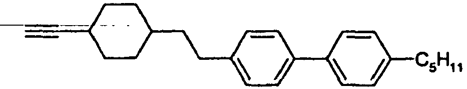 über einen weiten Bereich smektisch, und der Klärpunkt ist relativ niedrig. Die in DE 32 46 440 A1 offenbarte Verbindung der folgenden Formel 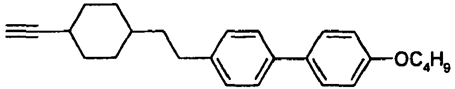 zeigt sogar keinerlei flüssigkristallines Verhalten.

Ebenso hat sich gezeigt, dass mögliche Verbindungen abgeleitet aus der in der DE3246440 A1 bevorzugten Unterformel XXVI 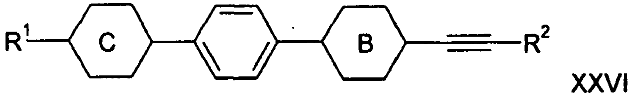 nicht oder nur schlecht geeignet sind, um ausreichend stabile (insbesondere UV-stabile) flüssigkristalline Verbindungen, oder Verbindungen mit einem guten Verhältnis von Rotationsviskosität zu Klärpunkt, zu liefern.

Stellt B in dieser Formel XXVI z.B. eine 1,4-Phenyleneinheit dar, so werden Biphenylacetylene erhalten. Diese Verbindungen sind deutlich weniger UV-stabil als beispielsweise Phenylacetylene, und können für moderne AM-Anwendungen in der Regel nicht verwendet werden, da dies zu einer schlechten Reliability führt. Noch weniger geeignet erscheinen Verbindungen der Unterformel XXVI, in denen die Ringe B und C 1,4-Phenyleneinheiten darstellen.

Ist die Alkinylgruppe dagegen direkt an eine trans-1,4-Cyclohexylen-einheit gebunden, so werden Verbindungen mit niedrigeren Klärpunkten und einem insgesamt schlechteren Verhältnis von Rotationsviskosität zu Klärpunkt erhalten.

In der EP 0 501 268 B1 werden Verbindungen der allgemeinen Formel 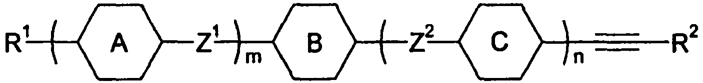 beschrieben, in denen der Ring B eine 2,3-Difluorphenyleneinheit darstellt. Die Ringe A und C können unabhängig voneinander u. A. gleich 1,4-Phenylen sein oder ein trans-1,4-disubstituiertes Cyclohexan bedeuten. Die Parameter m und n können 0, 1 oder 2 bedeuten wobei die Summe m + n 1 oder 2 beträgt. Die Reste R¹ und R² können eine Alkylkette mit 1 bis 10 Kohlenstoffatomen bedeuten.

Es hat sich jedoch gezeigt, dass durch die laterale Fluorierung in der Regel die absoluten Klärpunkte im Vergleich zu nicht fluorierten Verbindungen z.T. deutlich sinken und weniger breite nematische Phasen erhalten werden. Zudem erhöht sich zusätzlich durch die laterale Fluorierung in der Regel die Rotationsviskosität.

Die Druckschrift US 5,264,149 A offenbart neben allgemeineren Formeln zwei Beispielverbindungen mit der Abfolge der Ringe "Cyclohexyl-Cyclohexyl-Phenyl" (Spalte 10, 12). Beide Verbindungen sind, wie die allgemeine Formel auch, an der Seite des Cyclohexylrings mit 1-E-propenyl substituiert.

Die Druckschriften EP 0 816 332 A1, DE 44 17 441 A1 und DE 40 27 458 A1 offenbaren Alkinylverbindungen, worin der terminale Ethinylrest seinerseits durch weitere Gruppen wie Cyano, -CH₂F/-CHF₂ bzw. durch Halogen/Pseudohalogen/-OCF₃/-SCF₃ substituiert ist. Die erfindungsgemäßen Verbindungen sind an dieser Position durch eine Alkylkette mit 1-5 C-Atomen substituiert.

Es besteht somit weiterhin ein großer Bedarf an FK-Verbindungen und FK-Medien mit hoher Doppelbrechung und gleichzeitig breiten nematischen Phasen, niedriger Rotationsviskosität und hohem spezifischen Widerstand.

Gegenstand der vorliegenden Erfindung sind Verbindungen der Formel I 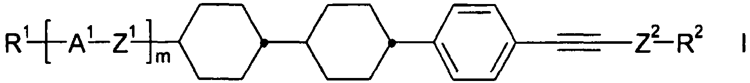 worin die einzelnen Reste folgende Bedeutung besitzen
- R¹ und R²: geradkettiges oder verzweigtes Alkyl mit 1 bis 5 C-Atomen,
- A¹: bei jedem Auftreten gleich oder verschieden Phenylen-1,4-diyl, worin auch eine oder zwei CH-Gruppen durch N ersetzt sein können und ein oder mehrere H-Atome durch Halogen, CN, CH₃, CHF₂, CH₂F, OCH₃, OCHF₂ oder OCF₃ ersetzt sein können, Cyclohexan-1,4-diyl, worin auch eine oder zwei nicht benachbarte CH₂ -Gruppen unabhängig voneinander durch O und/oder S ersetzt sein können, und ein oder mehrere H-Atome durch F ersetzt sein können, Cyclohexen-1,4-diyl, Bicyclo[1.1.1]pentan-1,3-diyl, Bicyclo[2.2.2]octan-1,4-diyl, Spiro[3.3]heptan-2,6-diyl, Tetrahydropyran-2,5-diyl, oder 1,3-Dioxan-2,5-diyl,
- Z¹ und Z²: jeweils eine Einfachbindung, und
- m: 0, 1, 2 oder 3.

Ein weiterer Gegenstand der Erfindung ist ein FK-Medium enthaltend eine oder mehrere Verbindungen der Formel I, vorzugsweise ein Medium aus zwei oder mehreren Verbindungen, die vorzugsweise flüssigkristallin oder mesogen sind. Das FK-Medium ist vorzugsweise nematisch.

Weiterer Gegenstand der Erfindung sind neue Verfahren zur Herstellung von Verbindungen der Formel I, sowie darin erhaltene bzw. verwendete Zwischenprodukte.

Weiterer Gegenstand der Erfindung ist die Verwendung von Verbindungen der Formel I und erfindungsgemäßen FK-Medien in elektrooptischen Anzeigen, insbesondere FK-Anzeigen.

Weiterer Gegenstand der Erfindung ist eine FK-Anzeige enthaltend eine oder mehrere Verbindungen der Formel I oder ein erfindungsgemäßes FK-Medium, insbesondere eine MFK-, TN-, STN- oder IPS-Anzeige.

In den Verbindungen der Formel I bedeutet m bevorzugt 0, 1 oder 2, besonders bevorzugt 0 oder 1, ganz besonders bevorzugt 0.

A¹ ist vorzugsweise ausgewählt aus folgenden Resten:

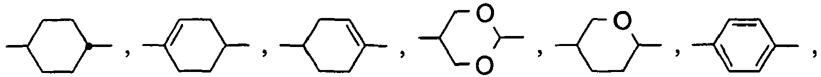

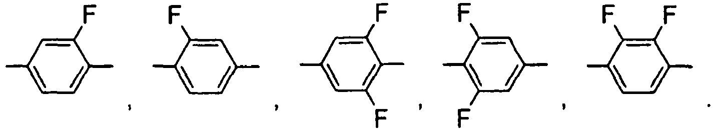

Besonders bevorzugt bedeutet A¹ trans-1,4-Cyclohexylen.

Besonders bevorzugt bedeutet R² Alkyl mit 1 bis 3 C-Atomen, ganz besonders bevorzugt Methyl.

Die Alkylreste können jeweils geradkettig oder verzweigt sein. Besonders bevorzugt sind geradkettige Alkylreste.

Besonders bevorzugt bedeuten R¹ und R² jeweils unabhängig voneinander geradkettiges Alkyl.

Bevorzugte Alkylgruppen sind beispielsweise Methyl, Ethyl, n-Propyl, n-Butyl und n-Pentyl.

Halogen bedeutet vorzugsweise F oder Cl.

FK-Medien, die ohne Gegenwart von chiralen Dotierstoffen eine achirale FK-Phase aufweisen, sowie Verbindungen der Formel I, worin die Reste Z^{1,2}, A¹, R^{1,2} kein Chiralitätszentrum aufweisen, sind generell bevorzugt.

Besonders bevorzugte Verbindungen der Formel I sind ausgewählt aus folgenden Unterformeln 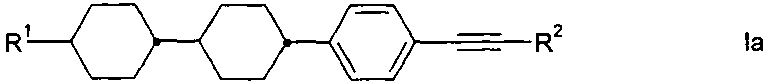 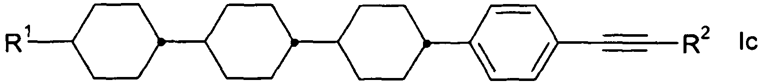 worin R¹ und R² die vor- und nachstehend angegebenen Bedeutungen besitzen.

Die Verbindungen der Formel I können in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart, hergestellt werden.

Nachfolgend sind besonders bevorzugte Verfahren zur Herstellung von Verbindungen der Formel I angegeben. Die darin gezeigten Schemata sollen diese Verfahren illustrieren ohne sie einzuschränken. Darin haben R¹, A¹, Z¹ und m die in Formel I angegebene Bedeutung.

Zentrale Zwischenprodukte für die bevorzugte Synthese von Verbindungen der Formel **I** sind die Verbindungen **6**. Diese Zwischenstufen werden vorzugsweise hergestellt wie in Schema **1** beschrieben.

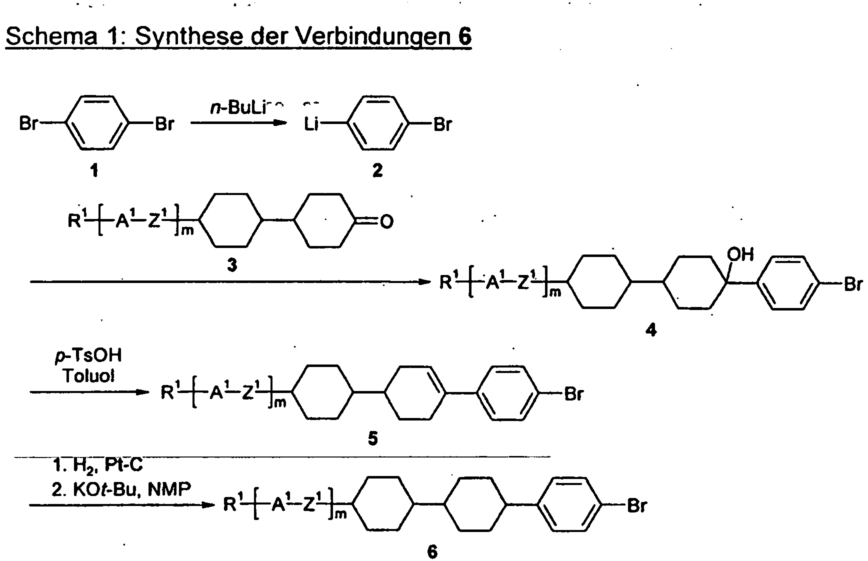

Durch Addition der aus 1,4-Dibrombenzol (**1**) erhaltenen lithiumorganischen Verbindung **2** an die Ketone **3** werden die Alkohole **4** erhalten. Die nach Wasserabspaltung gebildeten Alkene **5** werden hydriert, und das erhaltene Gemisch wird mit Kalium-*tert*-butylat in NMP zum bevorzugten Isomer der Verbindungen **6** isomerisiert.

Die Einführung der Alkinylseitenkette erfolgt dann durch *Sonogashira-*Kupplung mit geeigneten Alkinen **7**, wie in Schema 2 beispielhaft dargestellt.

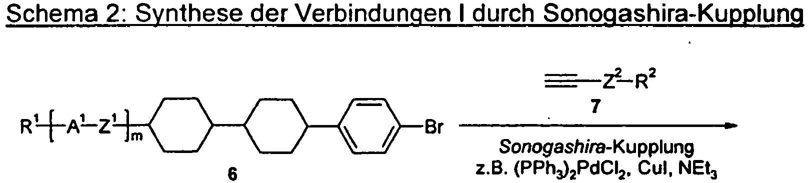

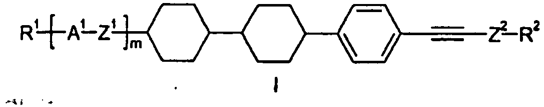

Die *Sonogashira*-Kupplung kann auch mit Trimethylsilyacetylen durchgeführt werden. Dann ergeben sich weitere Funktionalisierungsmöglichkeiten ausgehend von den Verbindungen **9**, wie in Schema 3 beispielhaft dargestellt.

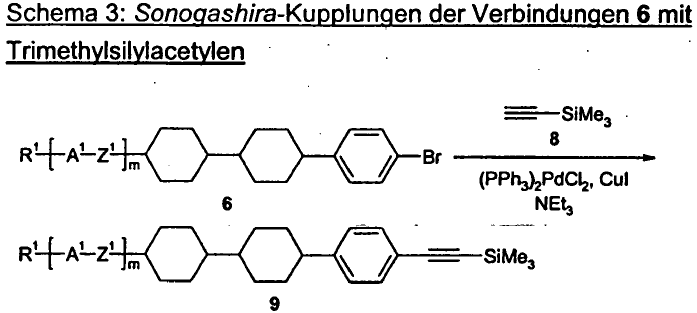

Durch Umsetzung des Acetylens **9** mit Kaliumcarbonat in Methanol werden die Verbindungen **10** (entspricht I mit Z² = Einfachbindung und R² = H) erhalten. Dies entspricht formal dem Produkt einer *Sonogashira-*Kupplung von Verbindung **6** mit Acetylen. Diese terminalen Acetylene können mit geeigneten Basen zu entsprechenden Acetyliden **11** (hier: Lithiumacetylid der Verbindung **10**) deprotoniert werden. Diese Zwischenstufen lassen sich weiter funktionalisieren, z.B. durch Alkylierung mit geeigneten Alkylierungsmitteln. Dies kann unter geeigneten Bedingungen z.B. mit Alkyliodiden (R²-I) erfolgen, wie in Schema 4 beispielhaft dargestellt.

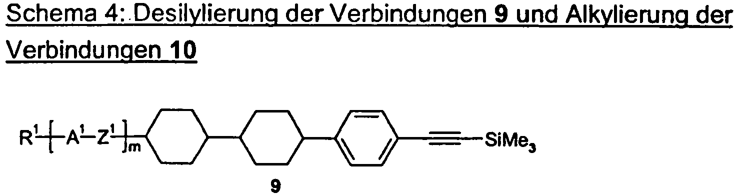

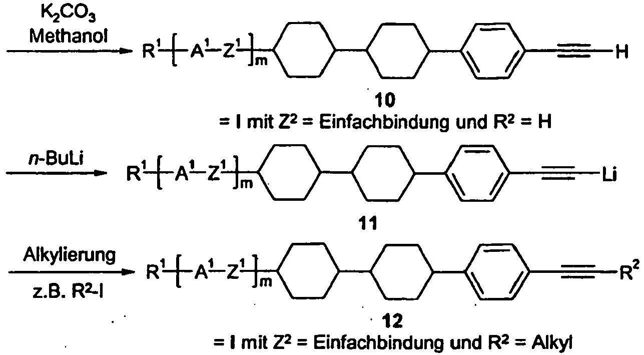

Eine weitere Möglichkeit zur Funktionalisierung der Verbindung **10** mit Alkylhalogeniden ist die *Kumada-Corriu* Reaktion, wie in Schema 4 beispielhaft dargestellt. Ein Variante wird in der Literatur [L.-M- Yang, L.-F. Huang, T.-Y. Luh, Org. Lett. 2004, 6, 1461-1463] beschrieben.

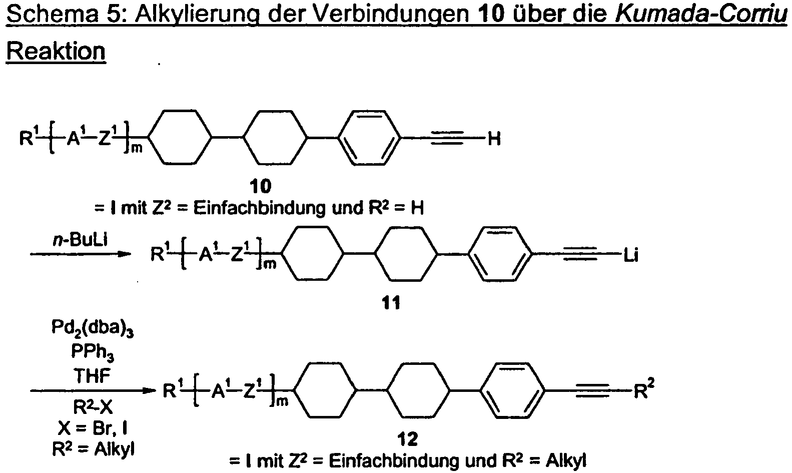

Die dargestellten Reaktionsschemata sind nur als beispielhaft aufzufassen. Der Fachmann kann entsprechende Variationen der vorgestellten Synthesen vornehmen sowie auch andere geeignete Synthesewege beschreiten, um Verbindungen der Formel I zu erhalten.

Die vor- und nachstehend beschriebenen Verfahren und die darin erzeugten bzw. verwendeten neuen Zwischenprodukte, sowie deren Verwendung zur Herstellung erfindungsgemäßer Verbindungen der Formel I, sind ein weiterer Gegenstand der vorliegenden Erfindung.

Besonders bevorzugt ist ein Verfahren zur Herstellung von Verbindungen der Formel I enthaltend folgende Schritte (a bis f1, bzw. a bis e und f2 bis i2, bzw. a bis e und f2 bis h2 und i3):
a) Metallierung von 1,4-Dihalogenbenzol an einer Halogenposition, vorzugsweise 1,4-Dibrombenzol, vorzugsweise mit einem metallorganischen Reagens, zum Beispiel Alkyllithiumverbindungen,
b) Addition der in Schritt a) erhaltenen metallorganischen Verbindung an ein Keton der folgenden Formel 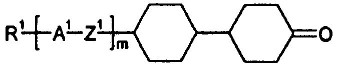
c) Wasserabspaltung aus dem in Schritt b) erhaltenen Alkohol,
d) Hydrierung des in Schritt c) erhaltenen Alkens,
e) optional Isomerisierung des in Schritt d) erhaltenen Gemisches zum bevorzugten Isomer (trans-trans-Isomer der Bicyclohexylgruppe) der folgenden Formel 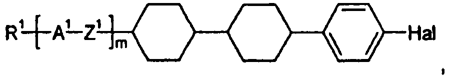
f1) *Sonogashira*-Kupplung der in Schritt e) erhaltenen Halogenverbindung mit einem geeigneten Alkin der Formel HC≡C-Z²-R², worin R² und Z² die in Anspruch 1 angegebene Bedeutung haben,
   oder
f2) *Sonogashira*-Kupplung der in Schritt e) erhaltenen Halogenverbindung mit Trialkylsilyacetylen,
g2) Desilylierung des in Schritt f2) erhaltenen Acetylens,
h2) Deprotonierung des in Schritt g2) terminalen Acetylens mit einer Base,
i2) Alkylierung des in Schritt h2) erhaltenenen Acetylids mit einem Alkylierungsmittel, zum Beispiel einem Alkyljodid der Formel R²-I, oder
i3) Umsetzung des in Schritt h2) erhaltenenen Acetylids mit einem Halogenalkan in einer *Kumada-Corriu* Reaktion,
wobei R¹, A¹ und Z¹ die in Anspruch 1 angegebene Bedeutung haben und Hal Halogen bedeutet.

Besonders bevorzugte erfindungsgemäße FK-Medien werden im Folgenden genannt:
- FK-Medium, welches zusätzlich eine oder mehrere Verbindungen der Formel II und/oder III enthält: 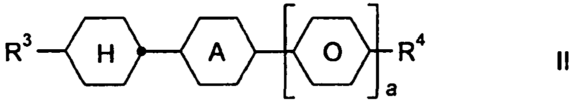 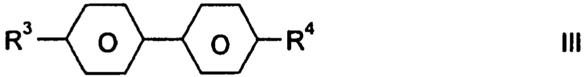 worin
   - A: 1,4-Phenylen oder trans-1,4-Cyclohexylen bedeutet,
   - a: 0 oder 1 ist,
   - R³: Alkenyl mit 2 bis 9 C-Atomen bedeutet, und
   - R⁴: Alkyl mit 1 bis 12 C-Atomen, wobei auch eine oder zwei nicht benachbarte CH₂-Gruppen durch -O-, -CH=CH-, -CO-, -OCO-oder -COO- so ersetzt sein können, dass O-Atome nicht direkt miteinander verknüpft sind, und vorzugsweise Alkyl mit 1 bis 12 C-Atomen oder Alkenyl mit 2 bis 9 C-Atomen bedeutet.

   Die Verbindungen der Formel II sind vorzugsweise ausgewählt aus der Gruppe bestehend aus folgenden Formeln: 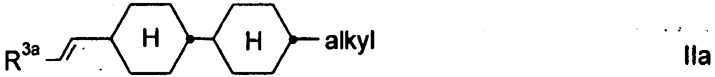 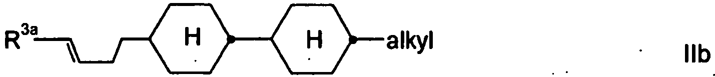 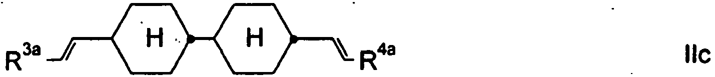 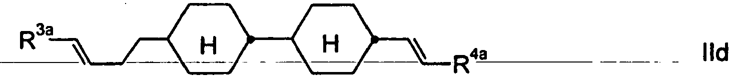 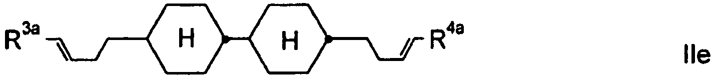 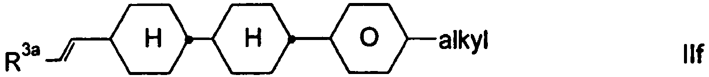 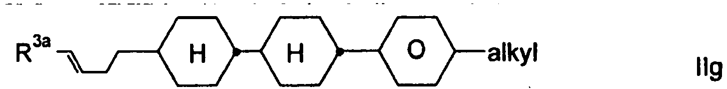 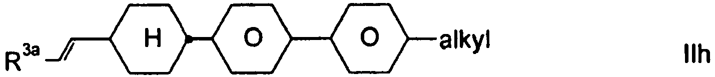 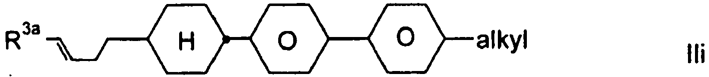 worin R^{3a} und R^{4a} jeweils unabhängig voneinander H, CH₃, C₂H₅ oder C₃H₇ bedeuten, und "alkyl" eine geradkettige Alkylgruppe mit 1 bis 8, vorzugsweise 1, 2, 3, 4 oder 5 C-Atomen bedeutet. Besonders bevorzugt sind Verbindungen der Formeln IIa und IIf, insbesondere worin R^{3a} H oder CH₃ , vorzugsweise H, bedeutet, und Verbindungen der Formel IIc, insbesondere worin R^{3a} und R^{4a} H, CH₃ oder C₂H₅ bedeuten.
   Die Verbindungen der Formel III sind vorzugsweise ausgewählt aus der Gruppe bestehend aus den folgenden Formeln: 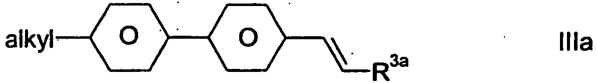 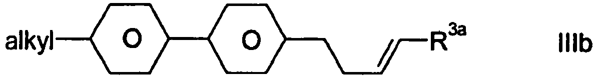 worin "alkyl" und R^{3a} die oben angegebenen Bedeutungen haben und R^{3a} vorzugsweise H oder CH₃ bedeutet. Besonders bevorzugt sind Verbindungen der Formel IIIb;
- FK-Medium, welches zusätzlich eine oder mehrere Verbindungen ausgewählt aus der Gruppe bestehend aus den folgenden Formeln enthält: 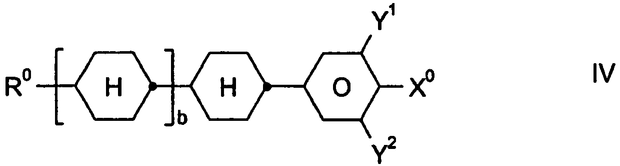 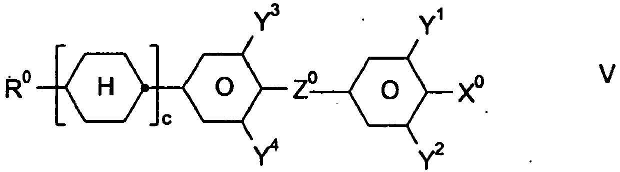 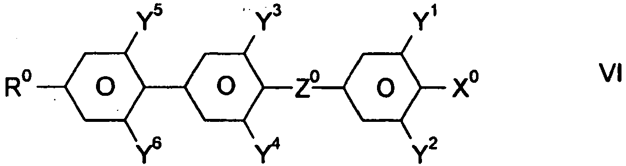 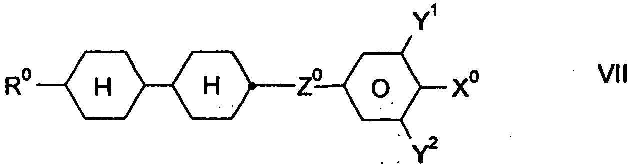 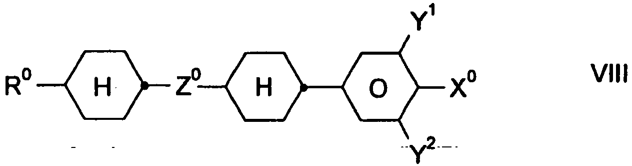 worin
   - R⁰: einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 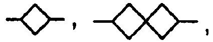 -O-, -CO-O- oder -O-CO- so ersetzt sein können, dass O-Atome nicht direkt miteinander verknüpft sind, und worin auch ein oder mehrere H-Atome durch Halogen ersetzt sein können,
   - X⁰: F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
   - Y¹⁻⁶: jeweils unabhängig voneinander H oder F,
   - Z⁰: -C₂H₄-, -(CH₂)₄-, -CH=CH-, -CF=CF-, -C₂F₄-, -CH₂CF₂-, -CF₂CH₂-, -CH₂O-, -OCH₂-, -COO-, -CF₂O- oder -OCF₂-, in den Formeln V und VI auch eine Einfachbindung, und
   - b und c: jeweils unabhängig voneinander 0 oder 1
bedeuten.

In den Verbindungen der Formeln IV bis VIII bedeutet X⁰ vorzugsweise F oder OCF₃, ferner OCHF₂, CF₃, CF₂H, Cl, OCH=CF₂. R⁰ ist vorzugsweise geradkettiges Alkyl oder Alkenyl mit jeweils bis zu 6 C-Atomen.

Die Verbindungen der Formel IV sind vorzugsweise ausgewählt aus der Gruppe bestehend aus den folgenden Formeln: 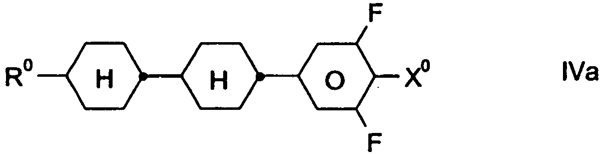 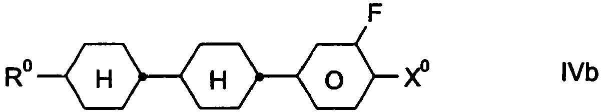 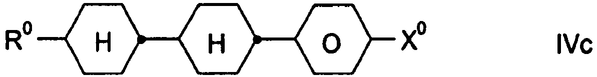 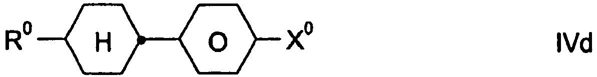 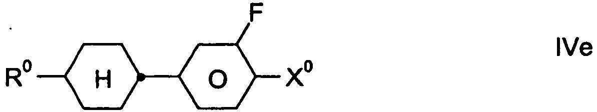 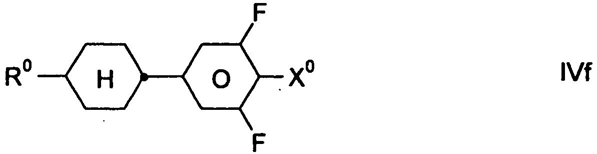 worin R⁰ und X⁰ die oben angegebenen Bedeutungen haben.

Vorzugsweise bedeutet in Formel IV R⁰ Alkyl mit 1 bis 8 C-Atomen und X⁰ F, Cl, OCHF₂ oder OCF₃, ferner OCH=CF₂. In der Verbindung der Formel IVb bedeutet R⁰ vorzugsweise Alkyl oder Alkenyl. In der Verbindung der Formel IVd bedeutet X° vorzugsweise Cl, ferner F.

Die Verbindungen der Formel V sind vorzugsweise ausgewählt aus der Gruppe bestehend aus den folgenden Formeln: 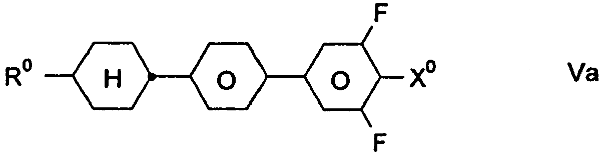 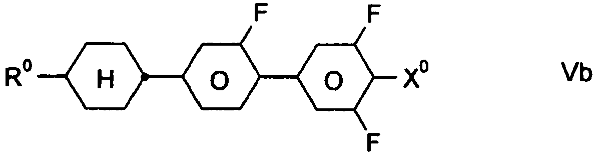 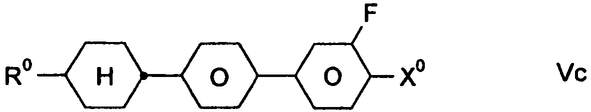 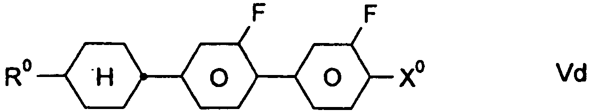 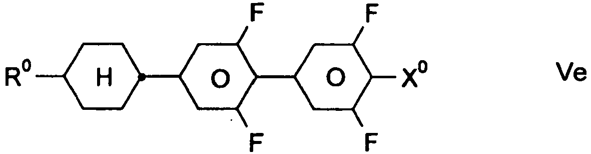 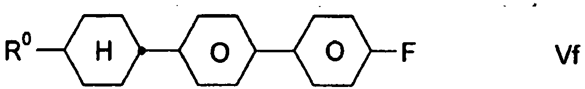 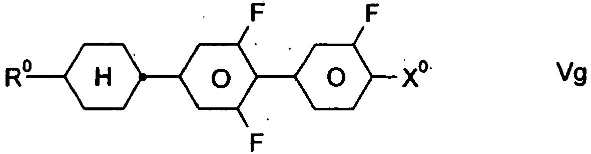 worin R⁰ und X⁰ die oben angegebenen Bedeutungen haben. Vorzugsweise bedeutet R⁰ in Formel V Alkyl mit 1 bis 8 C-Atomen und X⁰ F;
- FK-Medium, welches eine oder mehrere Verbindungen der Formel VI-1 enthält: 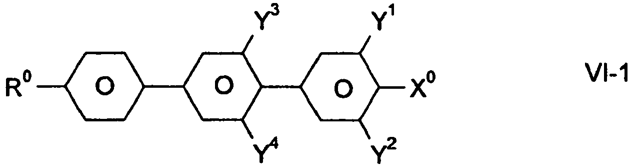 besonders bevorzugt solche ausgewählt aus der Gruppe bestehend aus den folgenden Formeln: 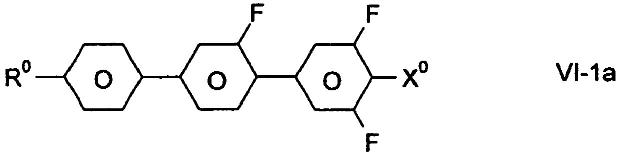 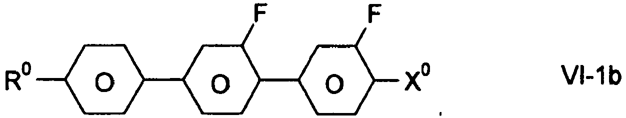 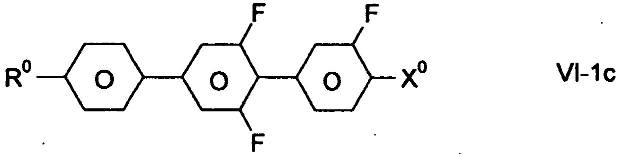 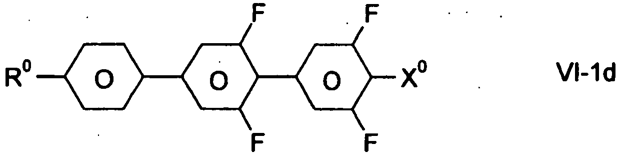 worin R⁰ und X⁰ die oben angegebenen Bedeutungen haben. Vorzugsweise bedeutet R⁰ in Formel VI Alkyl mit 1 bis 8 C-Atomen und X⁰ F, ferner OCF₃.
- FK-Medium, welches eine oder mehrere Verbindungen der Formel VI-2 enthält: 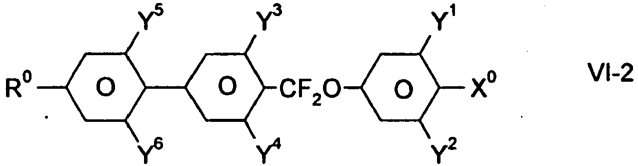 besonders bevorzugt solche ausgewählt aus der Gruppe bestehend aus den folgenden Formeln: 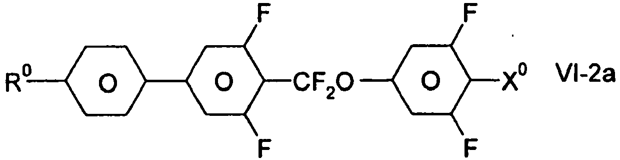 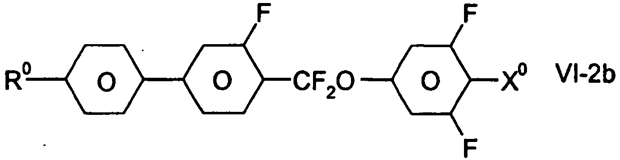 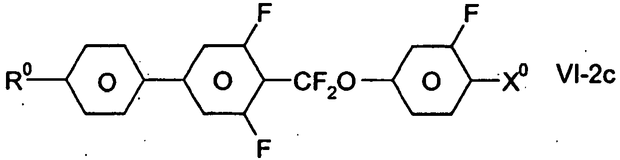 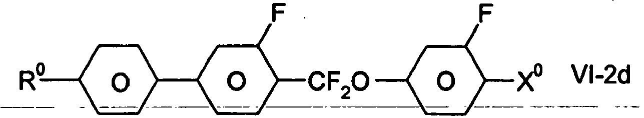 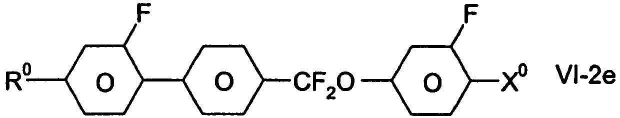 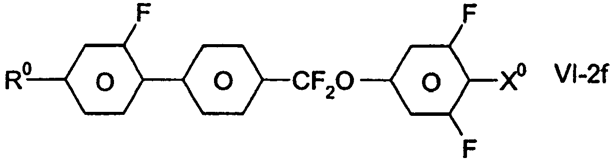 worin R⁰ und X⁰ die oben angegebenen Bedeutungen haben.
   Vorzugsweise bedeutet R⁰ in Formel VI Alkyl mit 1 bis 8 C-Atomen und X⁰ F;
- FK-Medium, welches vorzugsweise eine oder mehrere Verbindungen der Formel VII, worin Z⁰ -CF₂O-, -CH₂CH₂- oder -COO-, bedeutet, enthält, besonders bevorzugt solche ausgewählt aus der Gruppe bestehend aus den folgenden Formeln: 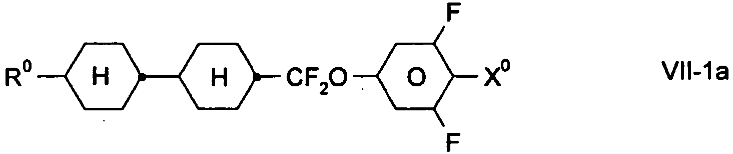 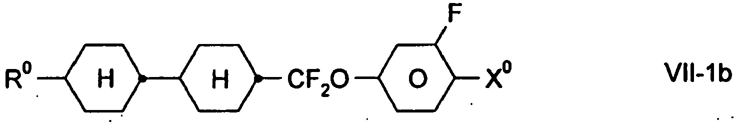 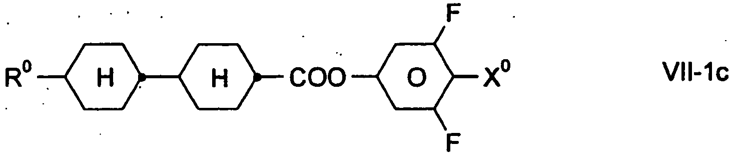 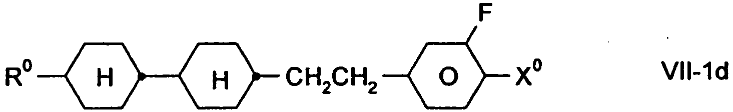 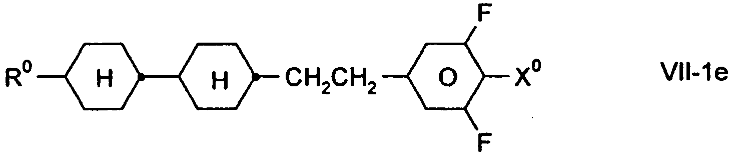 worin R⁰ und X⁰ die oben angegebenen Bedeutungen haben. Vorzugsweise bedeutet R⁰ in Formel VII Alkyl mit 1 bis 8 C-Atomen und X⁰ F, ferner OCF₃.

Die Verbindungen der Formel VIII sind vorzugsweise ausgewählt aus der Gruppe bestehend aus den folgenden Formeln: 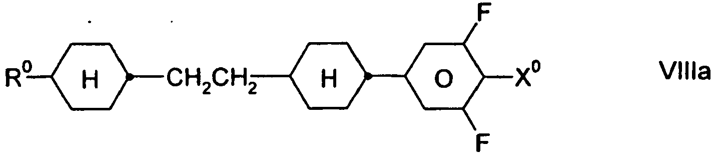 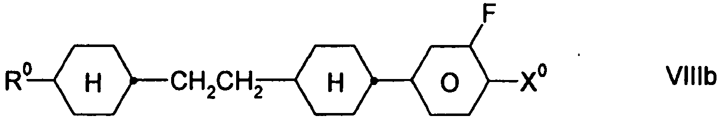 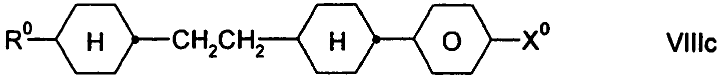 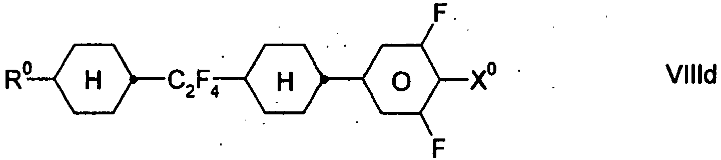 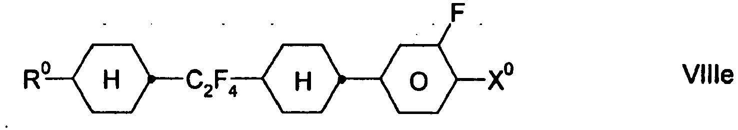 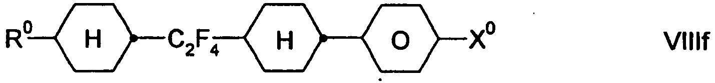 worin R⁰ und X⁰ die oben angegebenen Bedeutungen haben. Vorzugsweise bedeutet R⁰ einen geradkettigen Alkylrest mit 1 bis 8 C-Atomen. X⁰ bedeutet vorzugsweise F.
- FK-Medium, welches zusätzlich eine oder mehrere Verbindungen der folgenden Formel enthält: 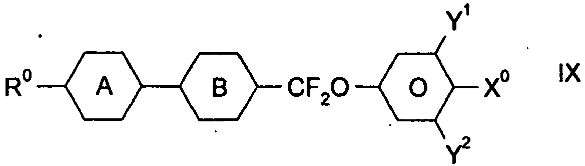 worin R⁰, X⁰, Y¹ und Y² die oben angegebene Bedeutung besitzen, und 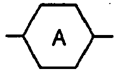 und 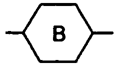 jeweils unabhängig voneinander 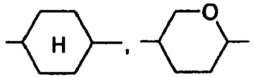 oder 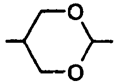 bedeuten, wobei die Ringe A und B nicht beide gleichzeitig Cyclohexylen bedeuten;

Die Verbindungen der Formel IX sind vorzugsweise ausgewählt aus der Gruppe bestehend aus den folgenden Formeln: 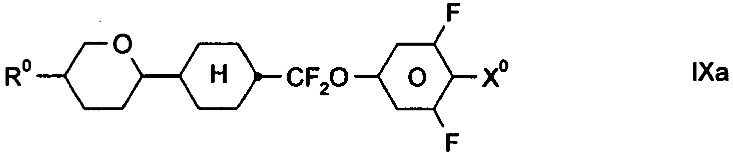 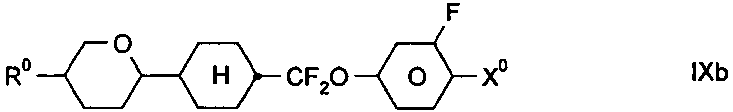 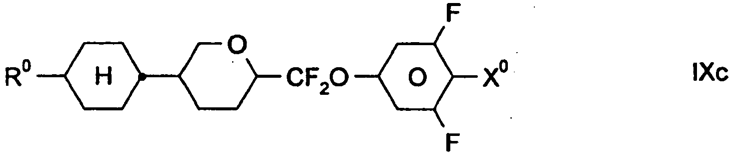 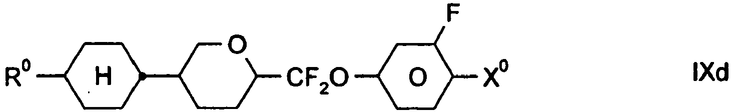 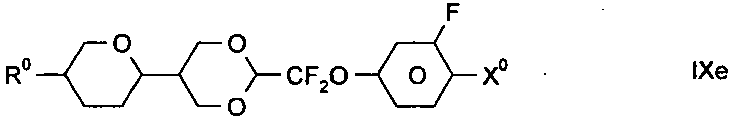 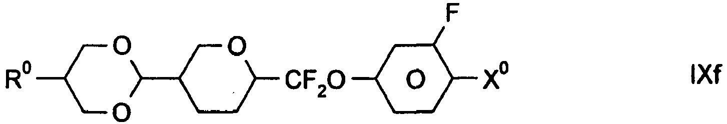 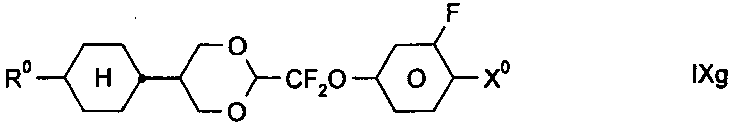 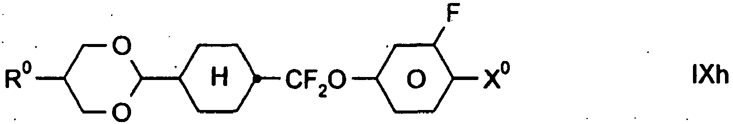 worin R⁰ und X⁰ die oben angegebenen Bedeutungen haben. Vorzugsweise bedeutet R⁰ Alkyl mit 1 bis 8 C-Atomen und X⁰ F. Besonders bevorzugt sind Verbindungen der Formel IXa;
- FK-Medium, welches zusätzlich eine oder mehrere Verbindungen ausgewählt aus der Gruppe bestehend aus den folgenden Formeln enthält: 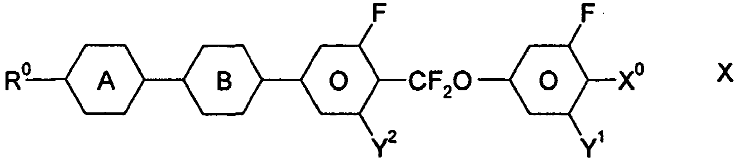 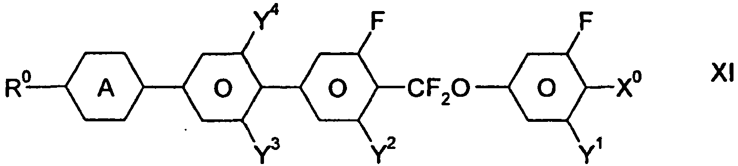 worin R⁰, X⁰ und Y¹⁻⁴ die oben angegebenen Bedeutungen besitzen, und 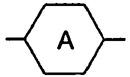 und 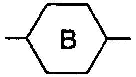 jeweils unabhängig voneinander 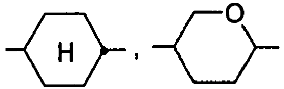 oder 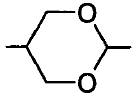 bedeuten;
Die Verbindungen der Formeln X und XI sind vorzugsweise ausgewählt aus der Gruppe bestehend aus den folgenden Formeln: 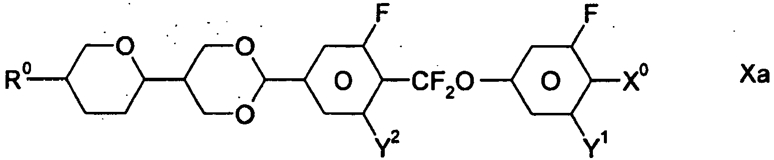 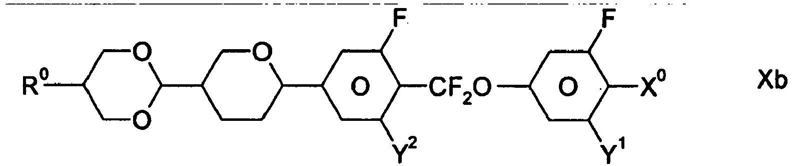 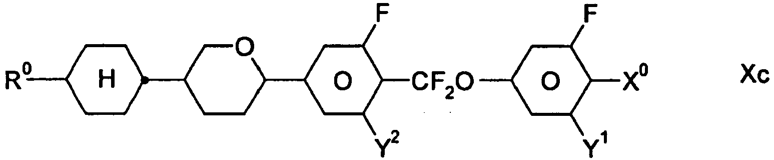 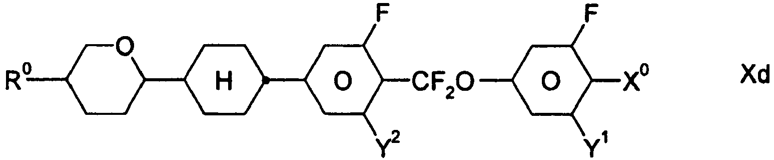 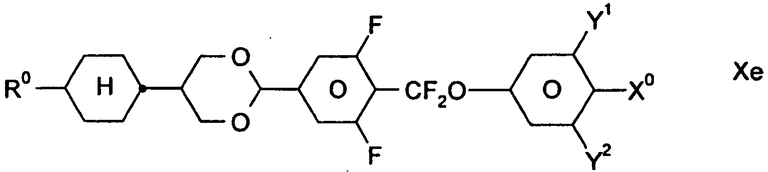 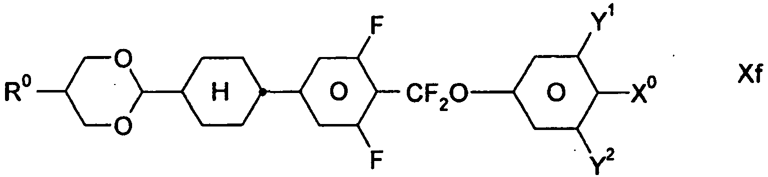 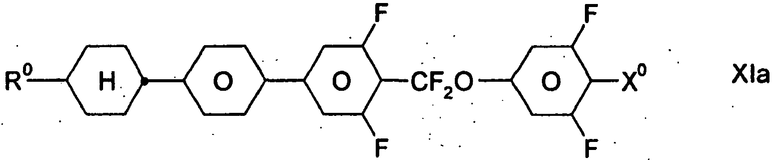 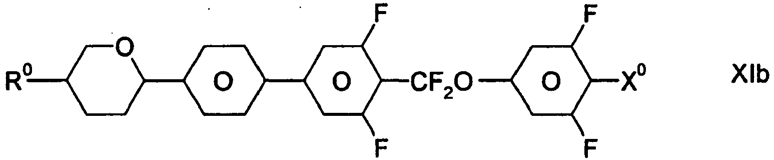 worin R⁰ und X⁰ die oben angegebenen Bedeutungen haben. Vorzugsweise bedeutet R⁰ Alkyl mit 1 bis 8 C-Atomen und X⁰ F. Besonders bevorzugte Verbindungen sind solche, worin Y¹ F und Y² H oder F, vorzugsweise F, bedeuten;
- FK-Medium, welches zusätzlich eine oder mehrere Verbindungen der folgenden Formel enthält: 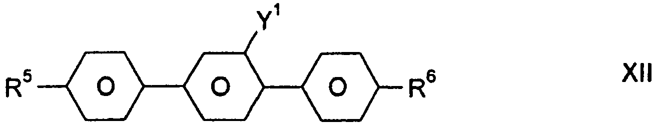 worin R⁵ und R⁶ jeweils unabhängig voneinander n-Alkyl, Alkoxy, Oxaalkyl, Fluoralkyl oder Alkenyl mit jeweils bis zu 9 C-Atomen bedeuten, und vorzugsweise jeweils unabhängig voneinander Alkyl mit 1 bis 8 C-Atomen bedeuten. Y¹ bedeutet H oder F.
Bevorzugte Verbindungen der Formel XII sind solche ausgewählt aus der Gruppe bestehend aus den folgenden Formeln: 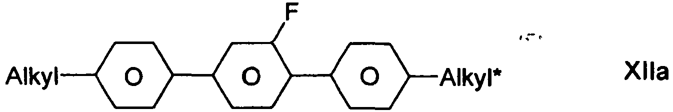 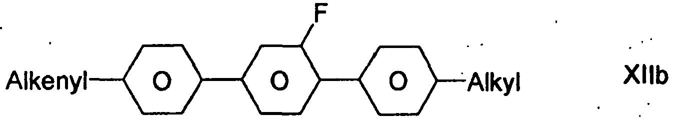 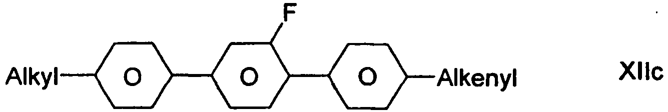 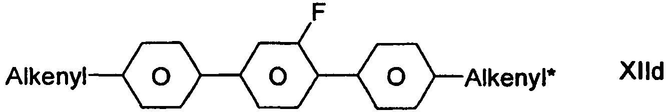 worin

| | |
|---|---|
| Alkyl und Alkyl* | jeweils unabhängig voneinander einen geradkettigen Alkylrest mit 1 bis 6 C-Atomen, und |
| | |
| Alkenyl und Alkenyl* | jeweils unabhängig voneinander einen geradkettigen Alkenylrest mit 2 bis 6 C-Atomen |

bedeuten.
- FK-Medium, welches zusätzlich eine oder mehrere Verbindungen ausgewählt aus der Gruppe bestehend aus den folgenden Formeln enthält: 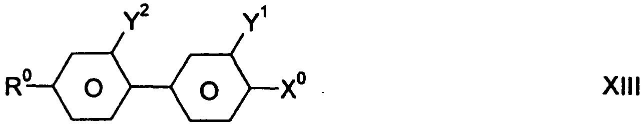 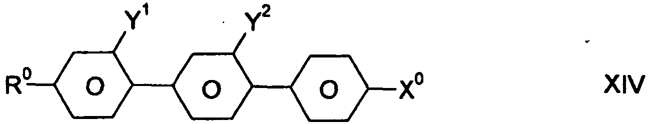 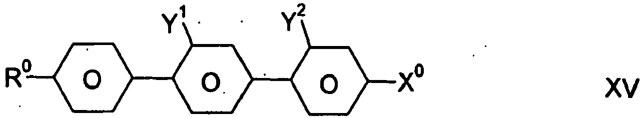 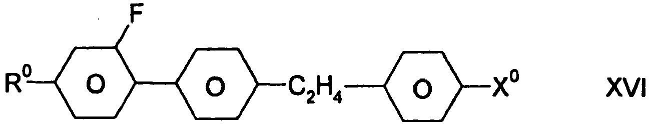 worin R⁰, X⁰, Y¹ und Y² die oben angegebenen Bedeutungen haben. Vorzugsweise bedeutet R⁰ Alkyl mit 1 bis 8 C-Atomen und X⁰ F oder Cl;
Die Verbindungen der Formeln XIII und XIV sind vorzugsweise ausgewählt aus der Gruppe bestehend aus den folgenden Formeln: 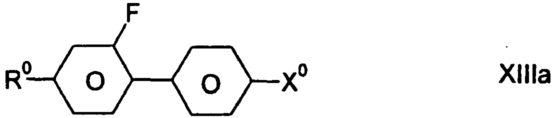 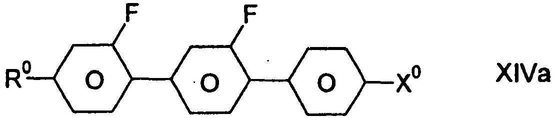 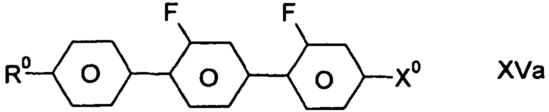 worin R⁰ und X⁰ die oben angegebenen Bedeutungen haben. Vorzugsweise bedeutet R⁰ Alkyl mit 1 bis 8 C-Atomen. In den Verbindungen der Formel XIII bedeutet X⁰ vorzugsweise F oder Cl.
- FK-Medium, welches zusätzlich eine oder mehrere Verbindungen der Formel D1 und/oder D2 enthält: 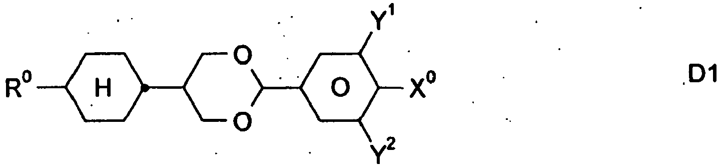 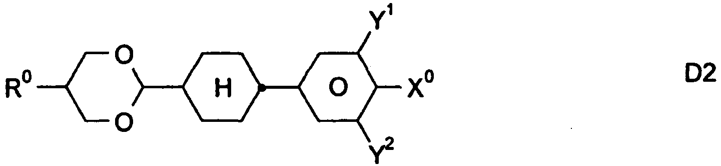 worin Y¹, Y², R⁰ und X⁰ die oben angegebene Bedeutung besitzen. Vorzugsweise bedeutet R⁰ Alkyl mit 1 bis 8 C-Atomen und X⁰ F. Besonders bevorzugt sind Verbindungen der folgenden Formeln: 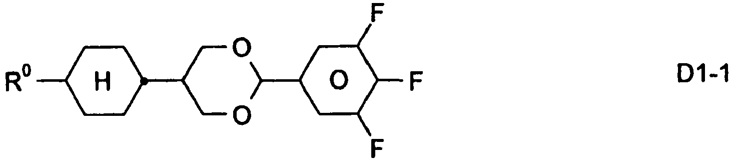 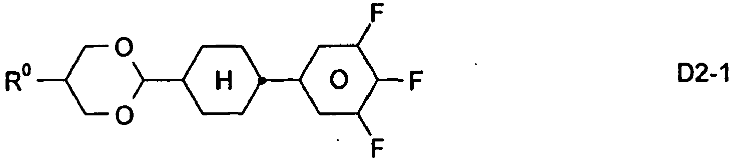 worin R⁰ die oben angegebenen Bedeutungen hat und vorzugsweise geradkettiges Alkyl mit 1 bis 6 C-Atomen, insbesondere C₂H₅, n-C₃H₇ oder n-C₅H₁₁ bedeutet.
- FK-Medium, welches zusätzlich eine oder mehrere Verbindungen der folgenden Formel enthält: 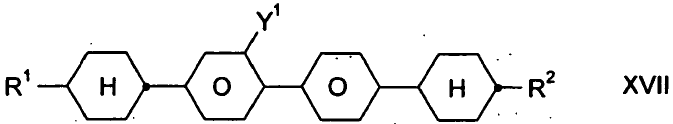 worin Y¹, R¹ und R² die oben angegebene Bedeutung besitzen. R¹ und R² bedeuten vorzugsweise jeweils unabhängig voneinander Alkyl mit 1 bis 8 C-Atomen;
- FK-Medium, welches zusätzlich eine oder mehrere Verbindungen der folgenden Formel enthält: 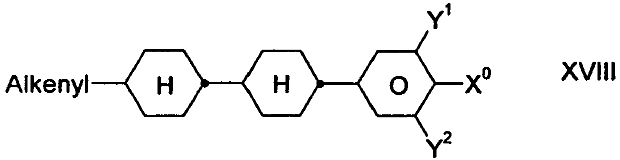 worin X⁰, Y¹ und Y² die oben angegebenen Bedeutungen besitzen und "Alkenyl" C₂₋₇-Alkenyl bedeutet. Besonders bevorzugt sind Verbindungen der folgenden Formel, 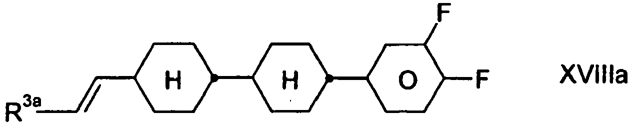 worin R^{3a} die oben angegebene Bedeutung hat und vorzugsweise H bedeutet;
- FK-Medium, welches zusätzlich eine oder mehrere Vierkern-Verbindungen ausgewählt aus der Gruppe bestehend aus den Formeln XIX bis XXV enthält: 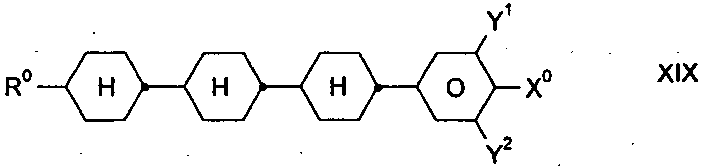 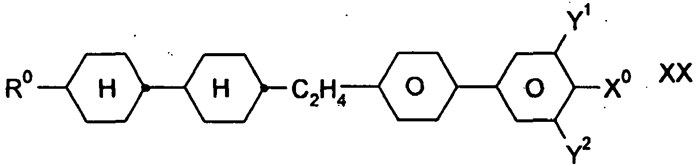 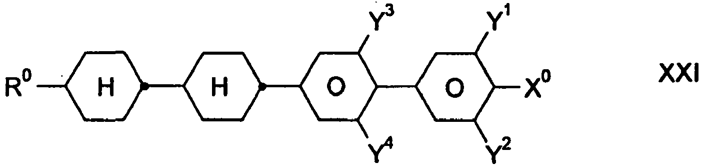 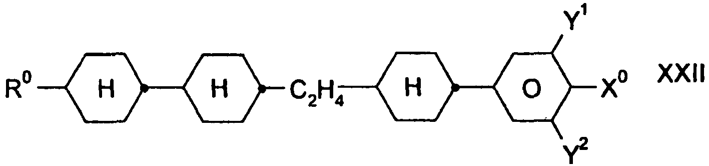 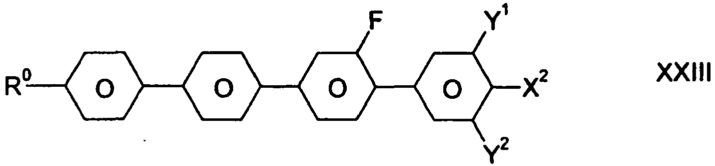 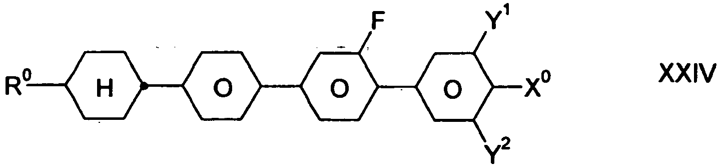 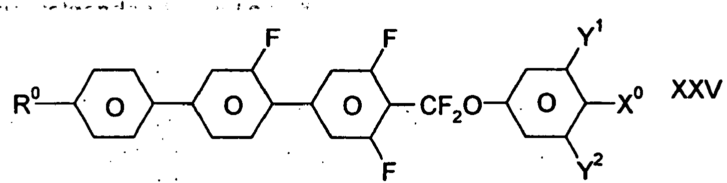 worin Y¹⁻⁴, R⁰ und X⁰ jeweils unabhängig voneinander eine der oben angegebenen Bedeutungen haben. X⁰ ist vorzugsweise F, Cl, CF₃, OCF₃ oder OCHF₂. R⁰ bedeutet vorzugsweise Alkyl, Alkoxy, Oxaalkyl, Fluoralkyl oder Alkenyl mit jeweils bis zu 8 C-Atomen.
- FK-Medium, welches zusätzlich eine oder mehrere Verbindungen der folgenden Formel enthält: 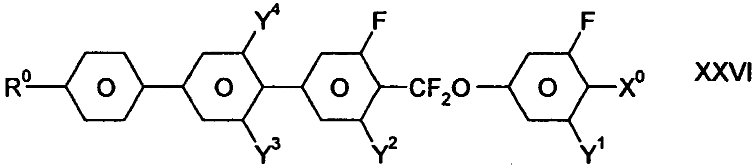 worin R⁰, X⁰ und Y¹⁻⁴ die oben angegebenen Bedeutungen besitzen. Besonders bevorzugt sind Verbindungen der folgenden Formel: 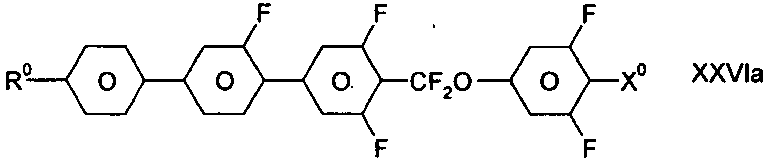
- FK-Medium, welches zusätzlich eine oder mehrere Verbindungen der folgenden Formel enthält: 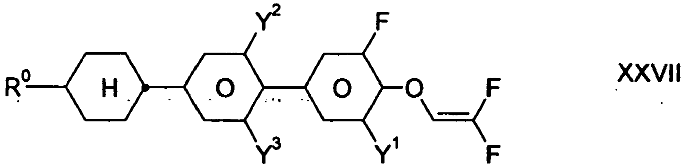 worin R⁰ und Y¹⁻³ die oben angegebenen Bedeutungen besitzen. Besonders bevorzugt sind Verbindungen der folgenden Formeln: 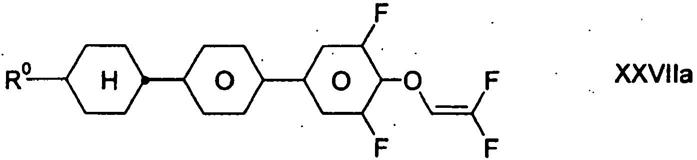 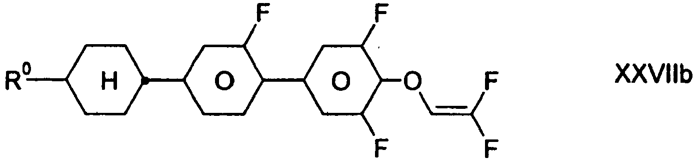 worin R⁰ die oben angegebene Bedeutung besitzt und vorzugsweise Alkyl, Alkoxy, Oxaalkyl, Fluoralkyl oder Alkenyl mit jeweils bis zu 8 C-Atomen bedeutet.
- FK-Medium, welches zusätzlich eine oder mehrere Verbindungen der folgenden Formel enthält: 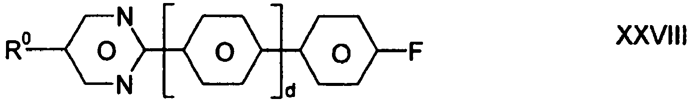 worin R⁰ die oben angegebene Bedeutung besitzt und vorzugsweise geradkettiges Alkyl mit 2-5 C-Atomen ist, und d 0 oder 1, vorzugsweise 1 bedeutet. Bevorzugte Mischungen enthalten 3 - 30 Gew.%, insbesondere 5 - 20 Gew.% dieser Verbindung(en). 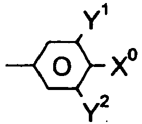 ist vorzugsweise 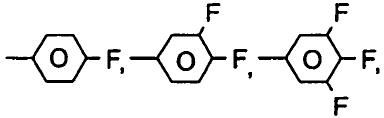 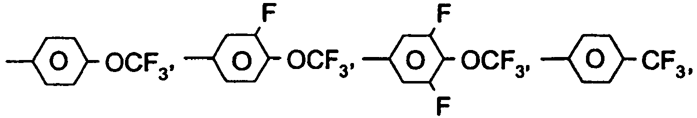 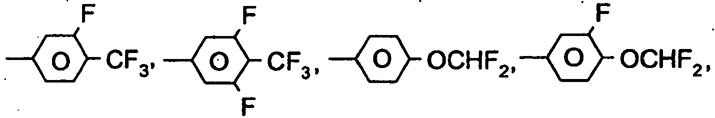 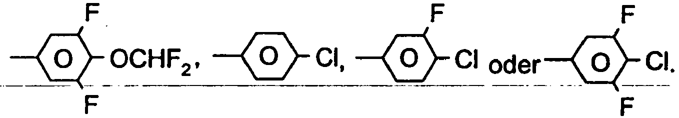
- R⁰ ist vorzugsweise geradkettiges Alkyl oder Alkenyl mit 2 bis 7 C-Atomen;
- X⁰ ist vorzugsweise F, ferner OCF₃, Cl oder CF₃;
- Das Medium enthält vorzugsweise eine, zwei oder drei Verbindungen der Formel I;
- Das Medium enthält vorzugsweise eine oder mehrere Verbindungen ausgewählt aus der Gruppe der Verbindungen der Formeln I, II, III, VI-2, XI, XII, XIII, XIV, XXIV, XXVI;
- Das Medium enthält vorzugsweise jeweils eine oder mehrere Verbindungen der Formeln VI-2, VII-1a/b, IX, X, XI, XXV und XXVI;
- Das Medium enthält vorzugsweise 1-25 Gew.%, bevorzugt 1-20 Gew.% an Verbindungen der Formel I;
- Der Anteil an Verbindungen der Formeln II-XXVIII im Gesamtgemisch beträgt vorzugsweise 20 bis 99 Gew.%;
- Das Medium enthält vorzugsweise 25-80 Gew.%, besonders bevorzugt 30-70 Gew.% an Verbindungen der Formel II und/oder III;
- Das Medium enthält vorzugsweise 20-70 Gew.%, besonders bevorzugt 25-60 Gew.% an Verbindungen der Formel IIa, insbesondere worin R^{3a} H bedeutet;
- Das Medium enthält vorzugsweise 2-20 Gew.%, besonders bevorzugt 3-15 Gew.% an Verbindungen der Formel VI-2;
- Das Medium enthält 2-20 Gew.%, besonders bevorzugt 3-15 Gew.% an Verbindungen der Formel XI;
- Das Medium enthält vorzugsweise 1-25 Gew.%, besonders bevorzugt 2-20 Gew.% an Verbindungen der Formel XXVI.

Es wurde gefunden, dass bereits ein relativ geringer Anteil an Verbindungen der Formel I im Gemisch mit üblichen Flüssigkristallmaterialien, insbesondere jedoch mit einer oder mehreren Verbindungen der Formeln II bis XXVIII zu einer beträchtlichen Erhöhung der Lichtstabilität und zu niedrigen Werten für die Doppelbrechung führt, wobei gleichzeitig breite nematische Phasen mit tiefen Übergangstemperaturen smektisch-nematisch beobachtet werden, wodurch die Lagerstabilität verbessert wird. Gleichzeitig zeigen die Mischungen sehr niedrige Schwellenspannungen und sehr gute Werte für die VHR bei UV-Belastung.

Der Ausdruck "Alkyl" bzw. "Alkyl*" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" bzw. "Alkenyl*" umfasst in dieser Anmeldung geradkettige und verzweigte Alkenylgruppen mit 2-7 Kohlenstoffatomen,insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1 E-Butenyl, 1 E-Pentenyl, 1 E-Hexenyl, 1 E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m = 1-6 oder m = 0 und n = 1-3.

Falls in den oben- und untenstehenden Formeln R⁰ einen Alkylrest und/oder einen Alkoxyrest bedeutet, so kann dieser geradkettig oder verzweigt sein. Vorzugsweise ist er geradkettig, hat 2, 3, 4, 5, 6 oder 7 C-Atome und bedeutet demnach bevorzugt Ethyl, Propyl, Butyl, Pentyl, Hexyl, Heptyl, Ethoxy, Propoxy, Butoxy, Pentoxy, Hexoxy oder Heptoxy, ferner Methyl, Octyl, Nonyl, Decyl, Undecyl, Dodecyl, Tridecyl, Tetradecyl, Pentadecyl, Methoxy, Octoxy, Nonoxy, Decoxy, Undecoxy, Dodecoxy, Tridecoxy oder Tetradedoxy.

Oxaalkyl bedeutet vorzugsweise geradkettiges 2-Oxapropyl (= Methoxymethyl), 2-(= Ethoxymethyl) oder 3-Oxabutyl (= 2-Methoxyethyl), 2-, 3-oder 4-Oxapentyl, 2-, 3-, 4- oder 5-Oxahexyl, 2-, 3-, 4-, 5- oder 6-Oxaheptyl, 2-, 3-, 4-, 5-, 6-, oder 7-Oxaoctyl, 2-, 3-, 4-, 5-, 6-, 7- oder 8-Oxanonyl, 2-, 3-, 4-, 5-, 6-, 7-, 8- oder 9-Oxadexyl.

Falls R⁰ einen Alkylrest bedeutet, in dem eine CH₂-Gruppe durch - CH=CH- ersetzt ist, so kann dieser geradkettig oder verzweigt sein. Vorzugsweise ist er geradkettig und hat 2 bis 10 C-Atome. Er bedeutet demnach besonders Vinyl, Prop-1-, oder Prop-2-enyl, But-1-, 2- oder But-3-enyl, Pent-1-, 2-, 3- oder Pent-4-enyl, Hex-1-, 2-, 3-, 4- oder Hex-5-enyl, Hept-1-, 2-, 3-, 4-, 5- oder Hept-6-enyl, Oct-1-, 2-, 3-, 4-, 5-, 6- oder Oct-7-enyl, Non-1-, 2-, 3-, 4-, 5-, 6-, 7- oder Non-8-enyl, Dec-1-, 2-, 3-, 4-, 5-, 6-, 7-, 8- oder Dec-9-enyl. Diese Reste können auch ein- oder mehrfach halogeniert sein.

Falls R⁰ einen mindestens einfach durch Halogen substituierten Alkyl-oder Alkenylrest bedeutet, so ist dieser Rest vorzugsweise geradkettig und Halogen ist vorzugsweise F oder Cl. Bei Mehrfachsubstitution ist Halogen vorzugsweise F. Die resultierenden Reste schließen auch perfluorierte Reste ein. Bei Einfachsubstitution kann der Fluor- oder Chlorsubstituent in beliebiger Position sein, vorzugsweise jedoch in ω-Position.

In den oben- und untenstehenden Formeln ist X⁰ vorzugsweise F, Cl oder ein ein- oder mehrfach fluorierter Alkyl- oder Alkoxyrest mit 1, 2 oder 3 C-Atomen oder ein ein- oder mehrfach fluorierter Alkenylrest mit 2 oder 3 C-Atomen. X⁰ ist besonders bevorzugt F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CH₂F, OCFHCF₂CF₃, OCFHCF₂CHF₂, OCH=CF₂, OCF=CF₂, OCF₂CHFCF₃, OCF₂CF₂CF₃, OCF₂CF₂CCIF₂, OCCIFCF₂CF₃, CF=CF₂, CF=CHF, oder CH=CF₂, ganz besonders bevorzugt F oder OCF₃.

Durch geeignete Wahl der Bedeutungen von R⁰ und X⁰ können die Ansprechzeiten, die Schwellenspannung, die Steilheit der Transmissionskennlinien etc. in gewünschter Weise modifiziert werden. Beispielsweise führen 1 E-Alkenylreste, 3E-Alkenylreste, 2E-Alkenyloxyreste und dergleichen in der Regel zu kürzeren Ansprechzeiten, verbesserten nematischen Tendenzen und einem höheren Verhältnis der elastischen Konstanten k₃₃ (bend) und k₁₁ (splay) im Vergleich zu Alkyl- bzw. Alkoxyresten. 4-Alkenylreste, 3-Alkenylreste und dergleichen ergeben im allgemeinen tiefere Schwellenspannungen und kleinere Werte von k₃₃/k₁₁ im Vergleich zu Alkyl- und Alkoxyresten. Die erfindungsgemäßen Mischungen zeichnen sich insbesondere durch hohe K₁-Werte aus und besitzen somit deutlich schnellere Schaltzeiten als die Mischungen aus dem Stand der Technik.

Das optimale Mengenverhältnis der Verbindungen der oben genannten Formeln hängt weitgehend von den gewünschten Eigenschaften, von der Wahl der Komponenten der oben genannten Formeln und der Wahl weiterer gegebenenfalls vorhandener Komponenten ab.

Geeignete Mengenverhältnisse innerhalb des oben angegebenen Bereichs können von Fall zu Fall leicht ermittelt werden.

Die Gesamtmenge an Verbindungen der oben genannten Formeln in den erfindungsgemäßen Gemischen ist nicht kritisch. Die Gemische können daher eine oder mehrere weitere Komponenten enthalten zwecks Optimierung verschiedener Eigenschaften. Der beobachtete Effekt auf die gewünschte Verbesserung der Eigenschaften der Mischung ist jedoch in der Regel umso größer je höher die Gesamtkonzentration an Verbindungen der oben genannten Formeln ist.

In einer besonders bevorzugten Ausführungsform enthalten die erfindungsgemäßen Medien Verbindungen der Formeln IV bis VIII, worin X⁰ F, OCF₃, OCHF₂, OCH=CF₂, OCF=CF₂ oder OCF₂-CF₂H bedeutet. Eine günstige synergistische Wirkung mit den Verbindungen der Formel I führt zu besonders vorteilhaften Eigenschaften. Insbesondere Mischungen enthaltend Verbindungen der Formeln I, VI und XI zeichnen sich durch ihre niedrigen Schwellenspannungen aus.

Die einzelnen Verbindungen der oben genannten Formeln und deren Unterformeln, die in den erfindungsgemäßen Medien verwendet werden können, sind entweder bekannt, oder sie können analog zu den bekannten Verbindungen hergestellt werden.

Gegenstand der Erfindung sind auch elektrooptische Anzeigen, wie z. B. TN-, STN-, TFT-, OCB-, IPS-, FFS- oder MFK-Anzeigen mit zwei planparallelen Trägerplatten, die mit einer Umrandung eine Zelle bilden, integrierten nicht-linearen Elementen zur Schaltung einzelner Bildpunkte auf den Trägerplatten und einer in der Zelle befindlichen nematischen Flüssigkristallmischung mit positiver dielektrischer Anisotropie und hohem spezifischem Widerstand, die derartige Medien enthalten sowie die Verwendung dieser Medien für elektrooptische Zwecke.

Die erfindungsgemäßen Flüssigkristallmischungen ermöglichen eine bedeutende Erweiterung des zur Verfügung stehenden Parameterraumes. Die erzielbaren Kombinationen aus Klärpunkt, Viskosität bei tiefer Temperatur, thermischer und UV-Stabilität und hoher optischer Anisotropie übertreffen bei weitem bisherige Materialien aus dem Stand der Technik.

Die erfindungsgemäßen Mischungen sind insbesondere für mobile Anwendungen und high-Δn-TFT-Anwendungen wie z. B. PDAs, Notebooks, LCD-TV und Monitore geeignet.

Die erfindungsgemäßen Flüssigkristallmischungen ermöglichen es, bei Beibehaltung der nematischen Phase bis -20 °C und bevorzugt bis -30 °C, besonders bevorzugt bis -40 °C, und des Klärpunkts ≥ 70 °C, vorzugsweise ≥ 75 °C, gleichzeitig Rotationsviskositäten γ₁ von ≤ 100 mPa·s, besonders bevorzugt ≤ 70 mPa·s zu erreichen, wodurch hervorragende MFK-Anzeigen mit schnellen Schaltzeiten erzielt werden können.

Die dielektrische Anisotropie der erfindungsgemäßen Flüssigkristallmischungen Δε ist vorzugsweise ≥ +5, besonders bevorzugt ≥ +10. Die Mischungen sind außerdem durch kleine Operationsspannungen gekennzeichnet. Die Schwellenspannung der erfindungsgemäßen Flüssigkristallmischungen ist vorzugsweise ≤ 1,5 V, insbesondere ≤1,2 V.

Die Doppelbrechung Δn der erfindungsgemäßen Flüssigkristallmischungen ist vorzugsweise ≥ 0,10, besonders bevorzugt ≥ 0,11.

Der nematische Phasenbereich der erfindungsgemäßen Flüssigkristallmischungen ist vorzugsweise mindestens 90°, insbesondere mindestens 100° breit. Vorzugsweise erstreckt sich dieser Bereich mindestens von -25 °C bis +70 °C.

Es versteht sich, dass durch geeignete Wahl der Komponenten der erfindungsgemäßen Mischungen auch höhere Klärpunkte (z.B. oberhalb 100 °C) bei höheren Schwellenspannungen oder niedrigere Klärpunkte bei niedrigeren Schwellenspannungen unter Erhalt der anderen vorteilhaften Eigenschaften realisiert werden können. Ebenso können bei entsprechend wenig erhöhten Viskositäten Mischungen mit größerem Δε und somit geringen Schwellen erhalten werden. Die erfindungsgemäßen MFK-Anzeigen arbeiten vorzugsweise im ersten Transmissionsminimum nach Gooch und Tarry [C.H. Gooch und H.A. Tarry, Electron. Lett. 10, 2-4, 1974; C.H. Gooch und H.A. Tarry, Appl. Phys., Vol. 8, 1575-1584, 1975], wobei hier neben besonders günstigen elektrooptischen Eigenschaften, wie z.B. hohe Steilheit der Kennlinie und geringe Winkelabhängigkeit des Kontrastes (DE-PS 30 22 818) bei gleicher Schwellenspannung wie in einer analogen Anzeige im zweiten Minimum, eine kleinere dielektrische Anisotropie ausreichend ist. Hierdurch lassen sich unter Verwendung der erfindungsgemäßen Mischungen im ersten Minimum deutlich höhere spezifische Widerstände verwirklichen als bei Mischungen mit Cyanverbindungen. Der Fachmann kann durch geeignete Wahl der einzelnen Komponenten und deren Gewichtsanteilen mit einfachen Routinemethoden die für eine vorgegebene Schichtdicke der MFK-Anzeige erforderliche Doppelbrechung einstellen.

Messungen des "Voltage Holding-ratio" (HR) [S. Matsumoto et al., Liquid Crystals 5, 1320 (1989); K. Niwa et al., Proc. SID Conference, San Francisco, June 1984, p. 304 (1984); G. Weber et al., Liquid Crystals 5, 1381 (1989)] haben ergeben, dass erfindungsgemäße Mischungen enthaltend Verbindungen der Formel I eine deutlich geringere Abnahme des HR unter UV-Belastung aufweisen als analoge Mischungen enthaltend anstelle den Verbindungen der Formel I Cyanophenylcyclohexane der Formel 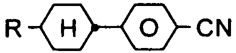 oder Ester der Formel

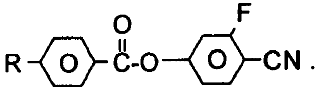

Die Lichtstabilität und UV-Stabilität der erfindungsgemäßen Mischungen ist erheblich besser, d.h. sie zeigen eine deutlich kleinere Abnahme des HR unter Licht- bzw. UV-Belastung. Bereits geringe Konzentrationen der Verbindungen (< 10 Gew.%) der Formel I in den Mischungen erhöhen die HR gegenüber Mischungen aus dem Stand der Technik um 6 % und mehr.

Die FK-Medien können auch weitere, dem Fachmann bekannte und in der Literatur beschriebene Zusätze, wie z. B: UV-Stabilisatoren wie Tinuvin^{®} der Fa. Ciba, Antioxidantien, Radikalfänger, Nanopartikel, etc. enthalten Beispielsweise können 0-15 % pleochroitische Farbstoffe oder chirale Dotierstoffe zugesetzt werden. Geeignete Stabilisatoren und Dotierstoffe werden nachfolgend in den Tabellen C und D genannt.

Die einzelnen Komponenten der oben genannten bevorzugten Ausführungsformen der erfindungsgemäßen FK-Medien sind entweder bekannt, oder ihre Herstellungsweisen sind für den einschlägigen Fachmann aus dem Stand der Technik ohne weiteres abzuleiten, da sie auf in der Literatur beschriebenen Standardverfahren basieren.

Es versteht sich für den Fachmann von selbst, daß die erfindungsgemäßen FK-Medien auch Verbindungen enthalten können, worin beispielsweise H, N, O, Cl, F durch die entsprechenden Isotope ersetzt sind.

Die Herstellung der erfindungsgemäß verwendbaren Flüssigkristallmischungen erfolgt in an sich üblicher Weise, beispielsweise indem man eine oder mehrere Verbindungen der Formel I mit einer oder mehreren Verbindungen der Formeln II-XXVIII oder mit weiteren flüssigkristallinen Verbindungen und/oder Additiven mischt. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Der Aufbau der erfindungsgemäßen MFK-Anzeige aus Polarisatoren, Elektrodengrundplatten und Elektroden mit Oberflächenbehandlung entspricht der für derartige Anzeigen üblichen Bauweise. Dabei ist der Begriff der üblichen Bauweise hier weit gefasst und umfasst auch alle Abwandlungen und Modifikationen der MFK-Anzeige, insbesondere auch Matrix-Anzeigeelemente auf Basis poly-Si TFT oder MIM.

Ein wesentlicher Unterschied der erfindungsgemäßen Anzeigen zu den bisher üblichen auf der Basis der verdrillten nematischen Zelle besteht jedoch in der Wahl der Flüssigkristallparameter der Flüssigkristallschicht.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Acronym für den Grundkörper angegeben. Im Einzelfall folgt getrennt von Acronym für den Grundkörper mit einem Strick ein Code für die Substituenten R¹*, R²*, L¹* und L²*:

| Code für R¹*, R²*, L¹*, L²*, L³* | R¹* | R²* | L¹* | L²* |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte Mischungskomponenten finden sich in den Tabellen A und B.

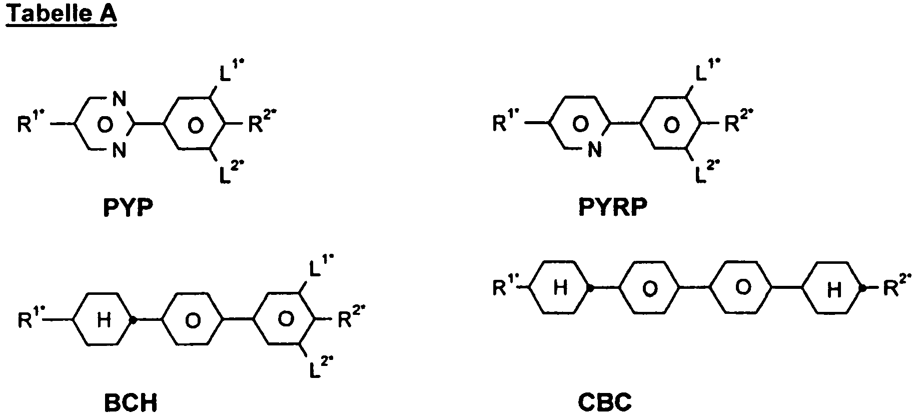

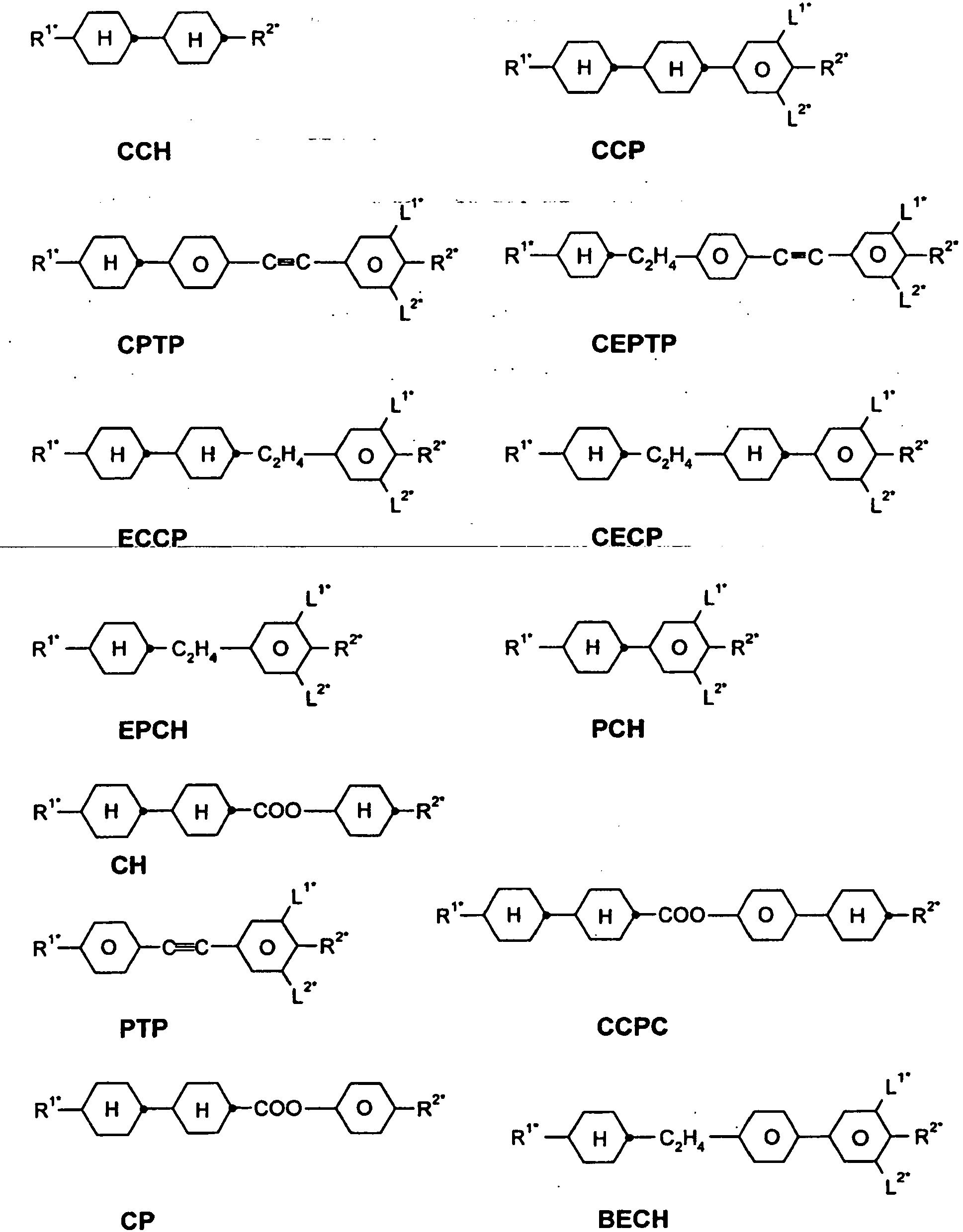

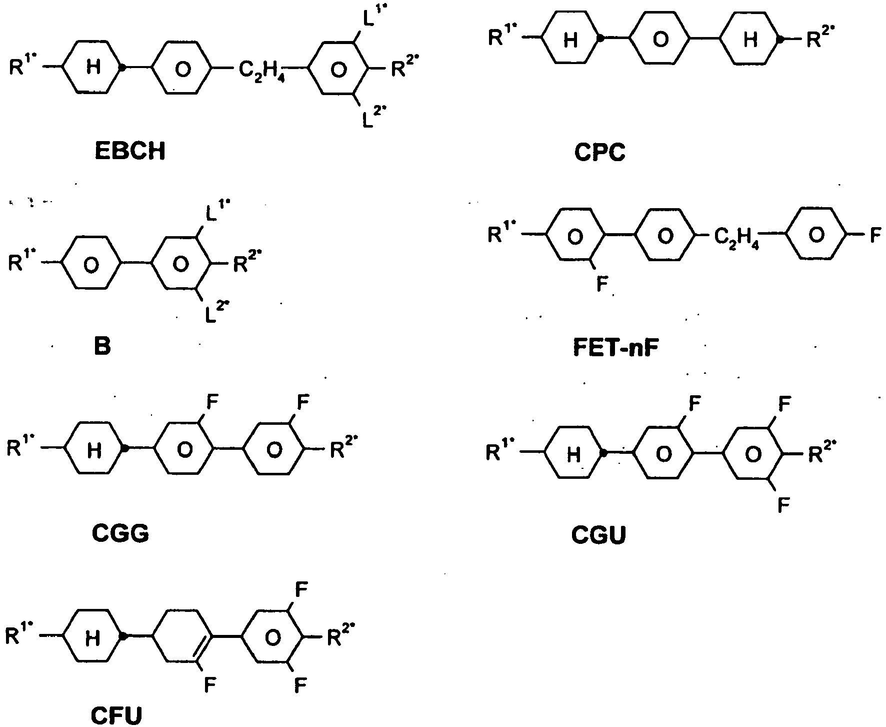

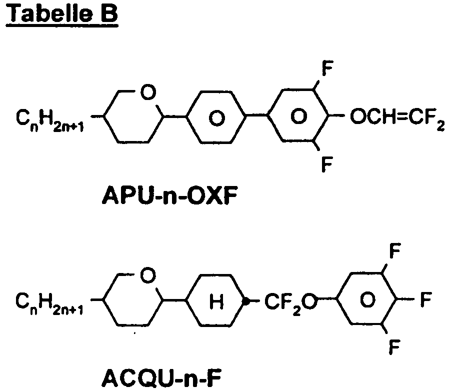

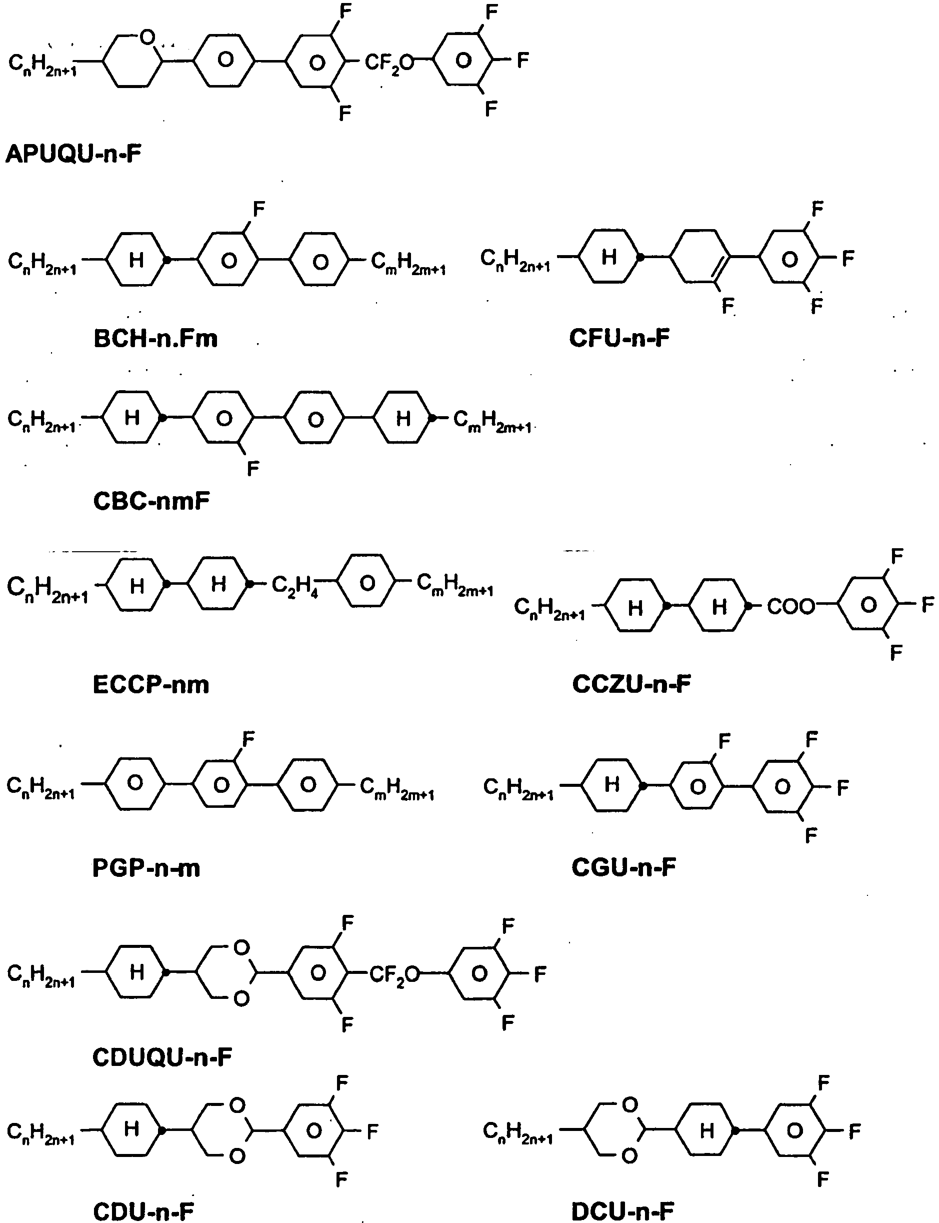

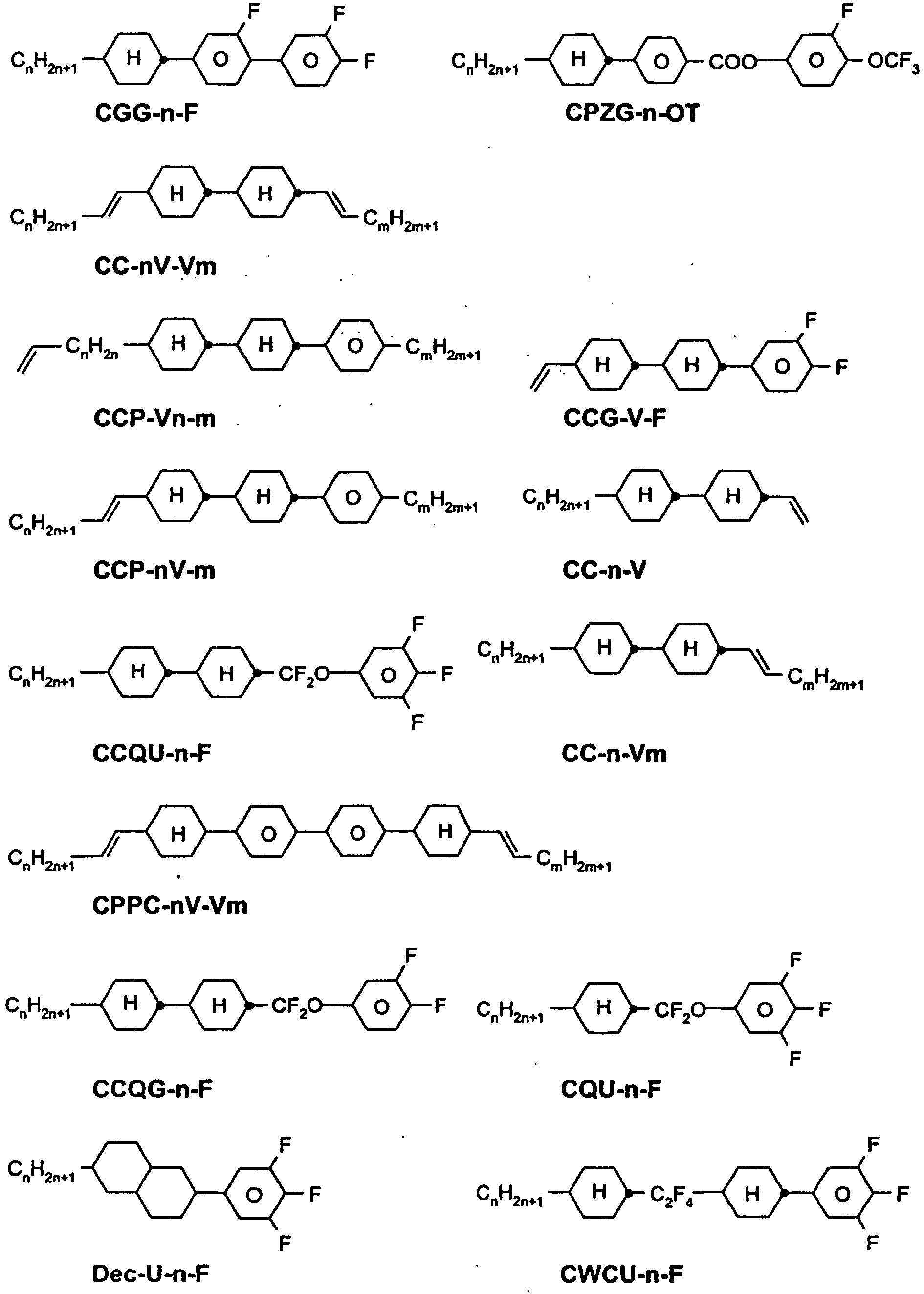

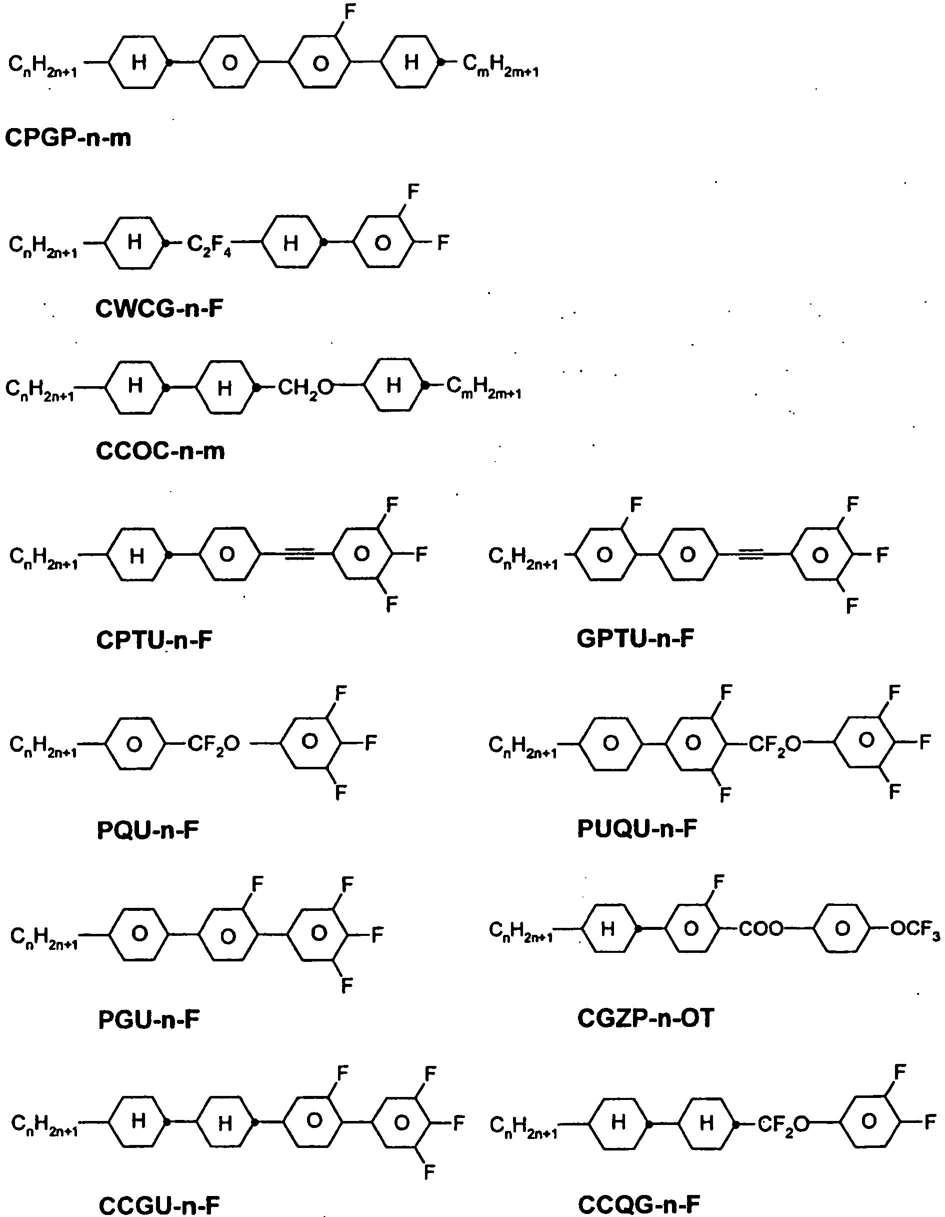

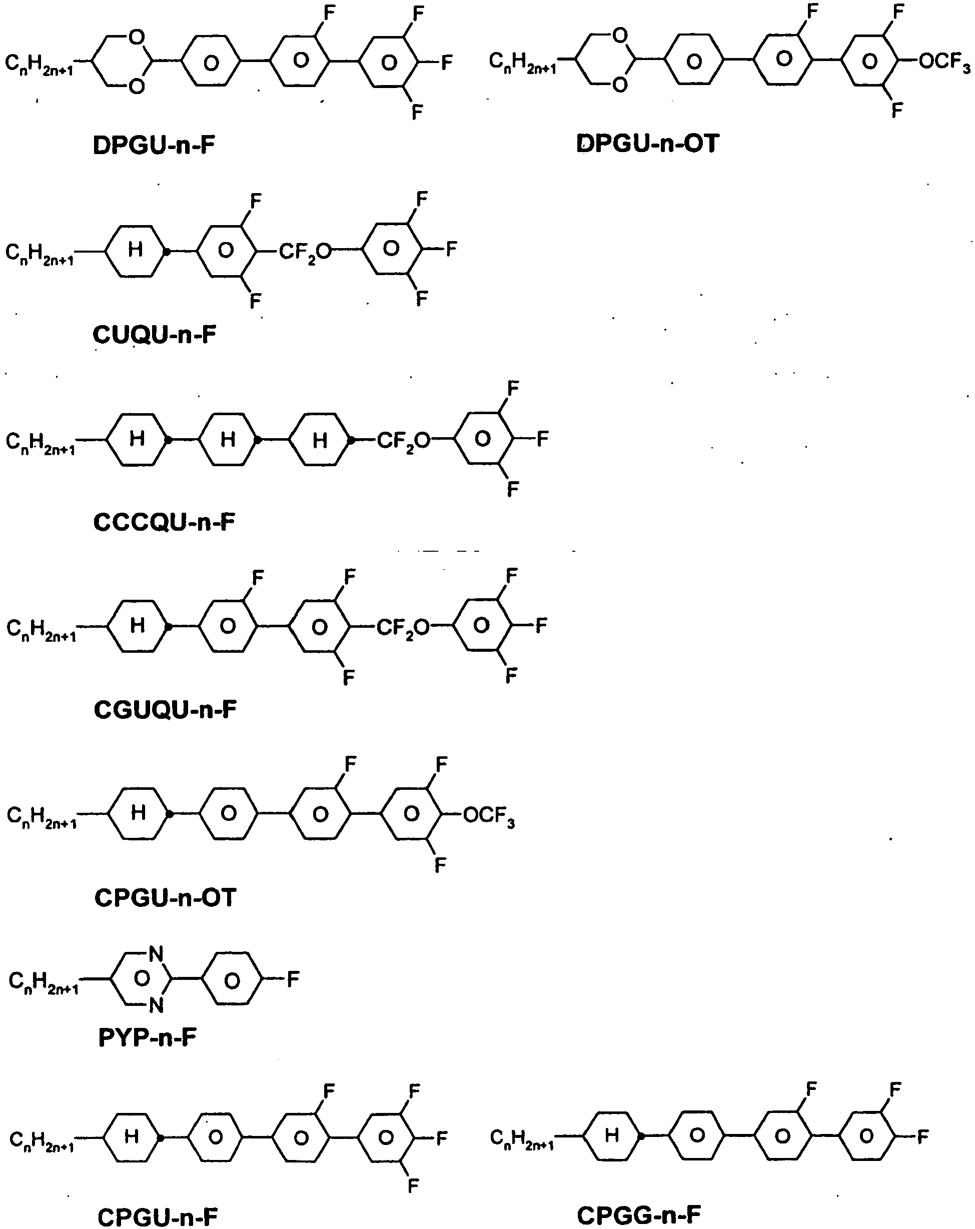

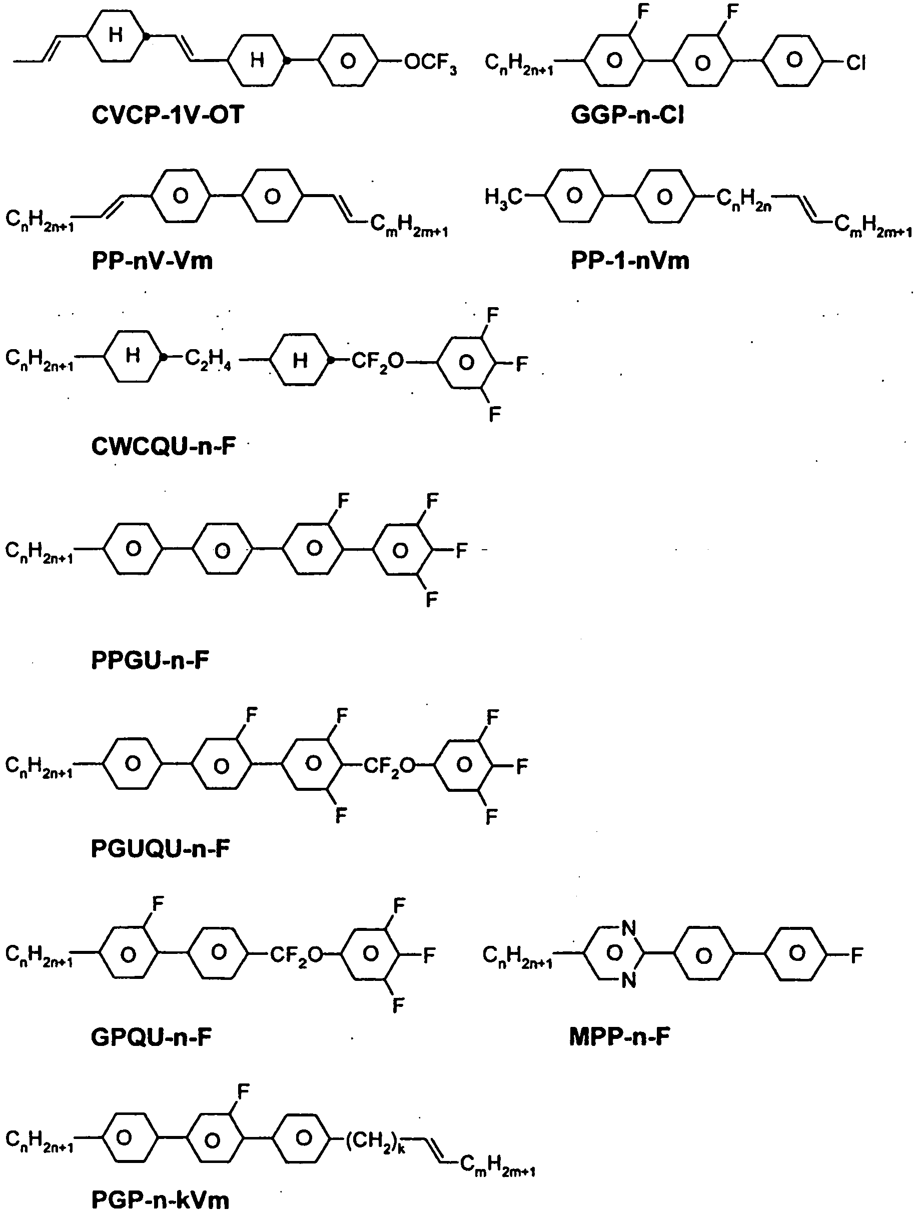

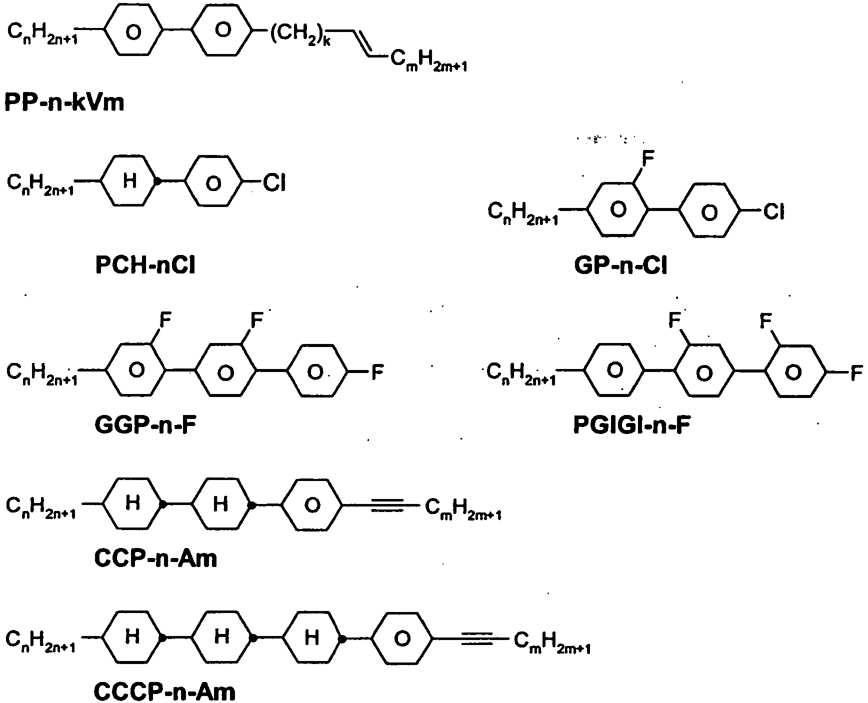

In einer bevorzugten Ausführungsform der vorliegenden Erfindung enthalten die erfindungsgemäßen FK-Medien eine oder mehrere Verbindungen ausgewählt aus der Guppe bestehend aus Verbindungen der Tabellen A und B.

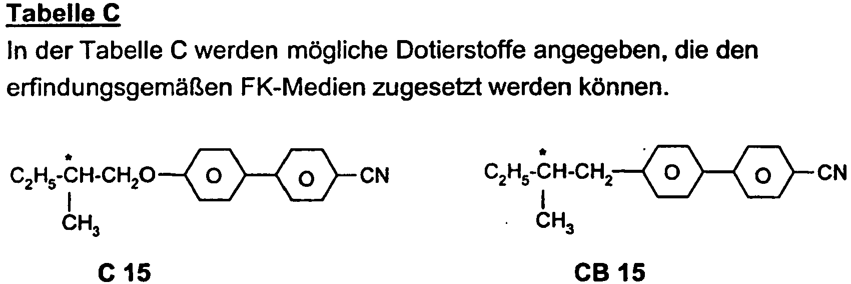

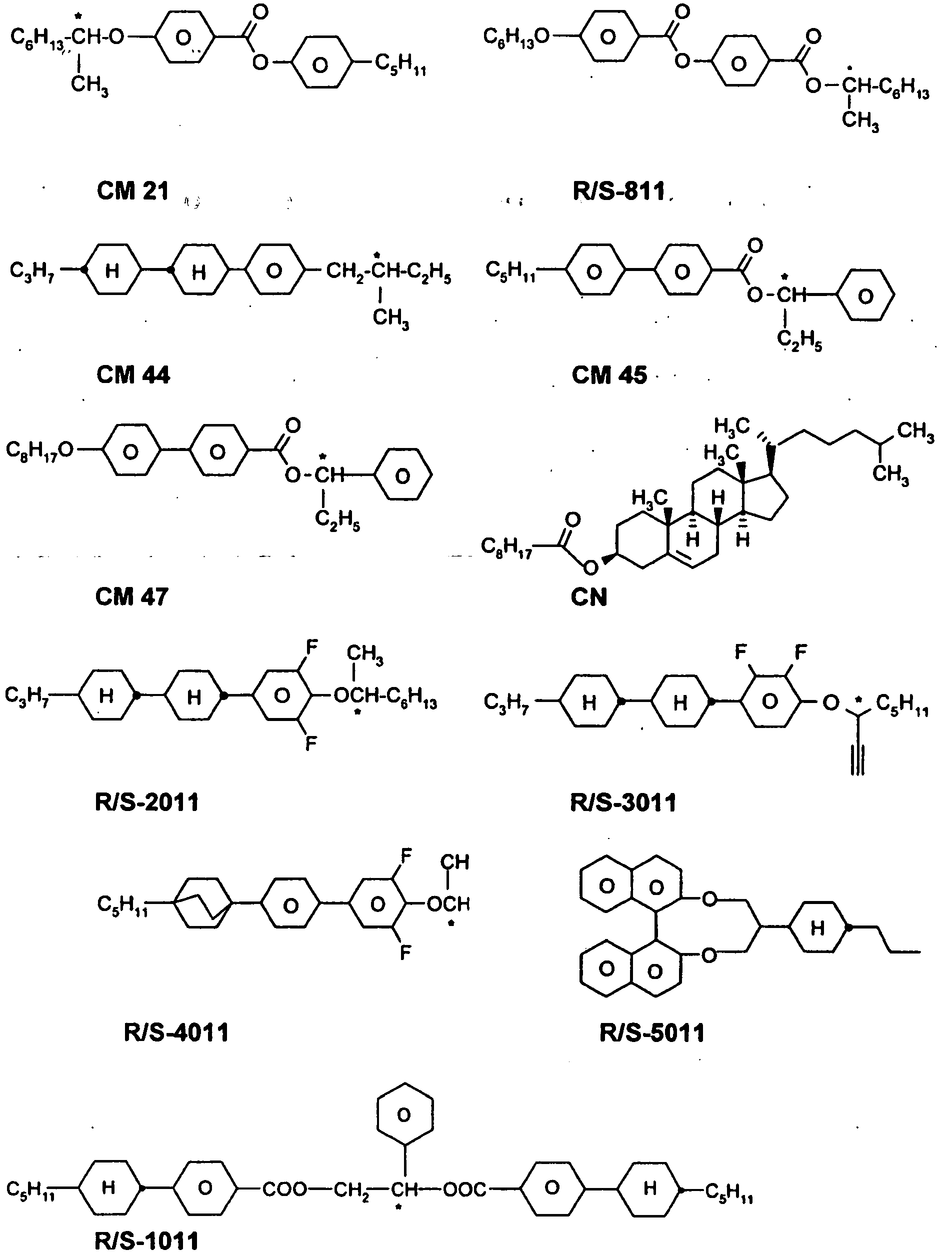

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Guppe bestehend aus Verbindungen der Tabelle C.

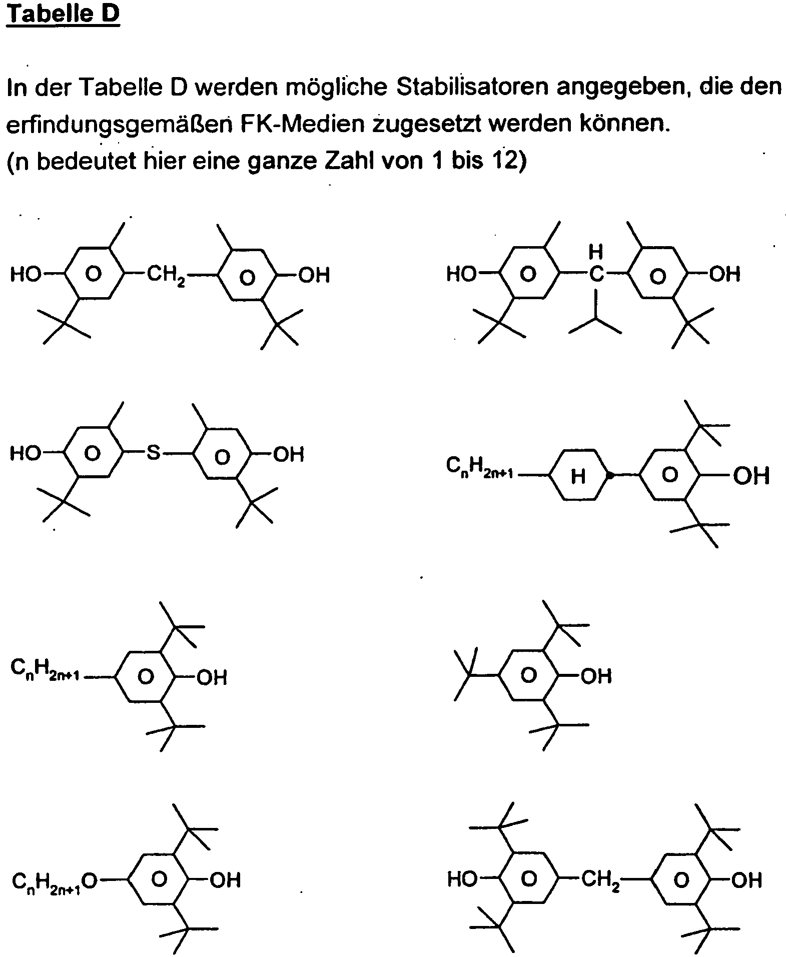

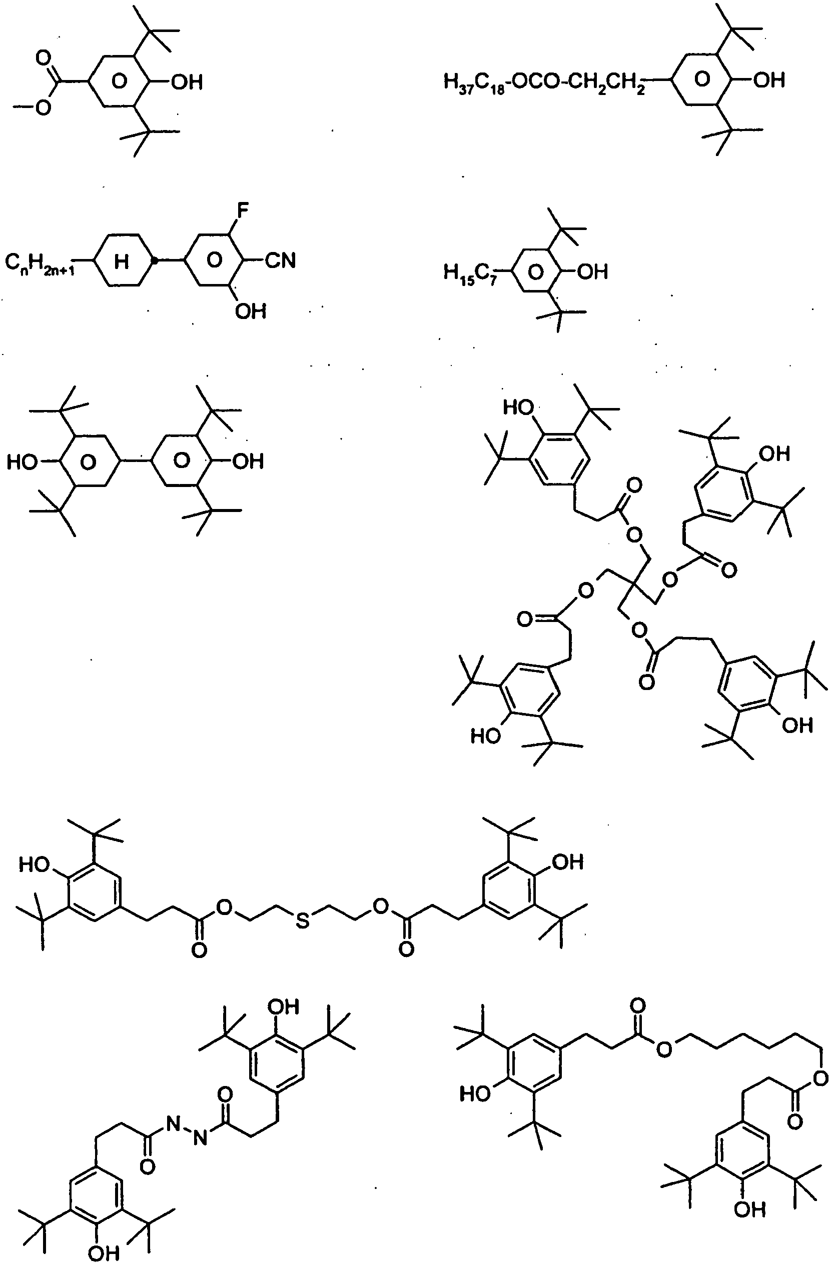

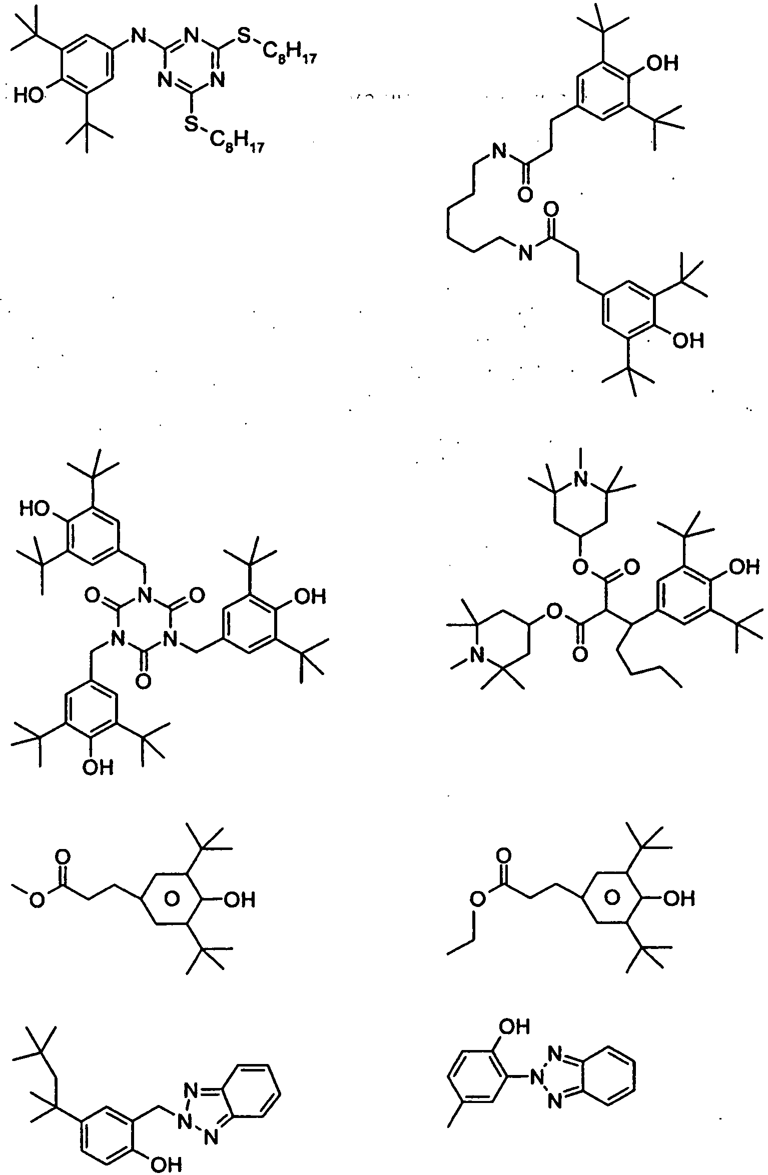

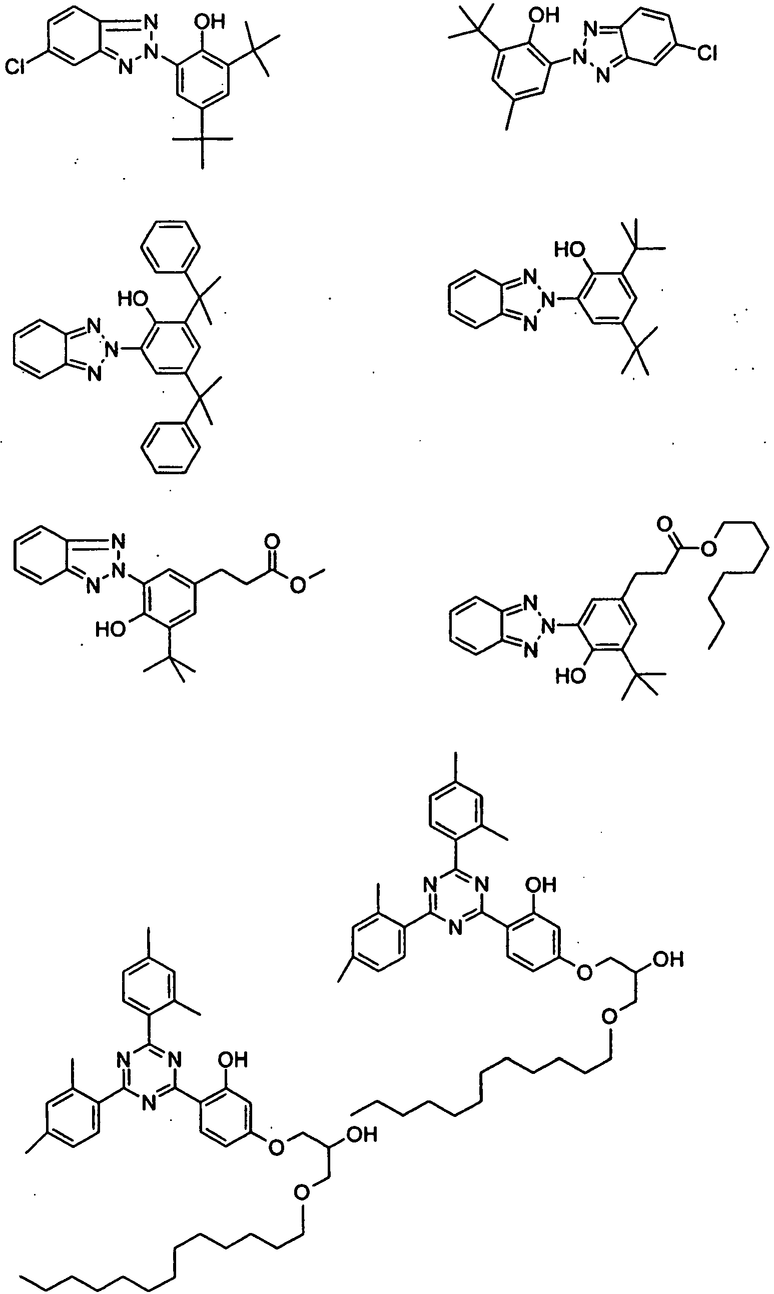

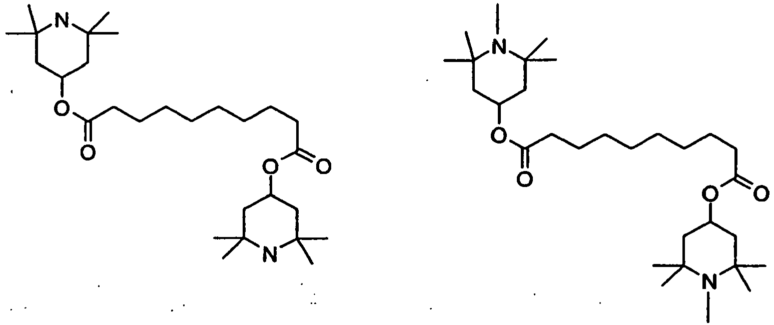

Vorzugsweise enthalten die FK-Medien 0 bis 10 Gew.%, insbesondere 0,01 bis 5 Gew.% und besonders bevorzugt 0,1 bis 3 Gew.% an Stabilisatoren. Vorzugsweise enthalten die FK-Medien einen oder mehrere Stabilisatoren ausgewählt aus der Gruppe bestehend aus Verbindungen der Tabelle D.

Außerdem werden folgende Abkürzungen und Symbole verwendet:
- V₀: Schwellenspannung, kapazitiv [V] bei 20°C,
- V₁₀: optische Schwelle für 10 % relativen Kontrast [V] bei 20°C,
- nₑ: außerordentlicher Brechungsindex bei 20°C und 589 nm,
- nₒ: ordentlicher Brechungsindex bei 20°C und 589 nm,
- Δn: optische Anisotropie bei 20°C und 589 nm,
- ε_{⊥}: dielektrische Suszeptibilität senkrecht zum Direktor bei 20°C und 1 kHz,
- ε_{∥}: dielektrische Suszeptibilität parallel zum Direktor bei 20°C und 1 kHz,
- Δε: dielektrische Anisotropie bei 20°C und 1 kHz,
- Kp., T(N,I): Klärpunkt [°C],
- γ₁: Rotationsviskosität bei 20°C [mPa·s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN],
- LTS: "low temperature stability" (Phase), bestimmt in Testzellen,
- HR₂₀: "voltage holding ratio" bei 20°C [%] und
- HR₁₀₀: "voltage holding ratio" bei 100°C [%].

Soweit nicht explizit anders vermerkt, sind in der vorliegenden Anmeldung alle Konzentrationen in Gewichtsprozent angegeben und beziehen sich auf die entsprechende Gesamtmischung ohne Lösungsmittel.

Soweit nicht explizit anders vermerkt, sind in der vorliegenden Anmeldung alle angegebenen Werte für Temperaturen, wie z. B. der Schmelzpunkt T(C,N), der Übergang von der smektischen (S) zur nematischen (N) Phase T(S,N) und der Klärpunkt T(N,I), in Grad Celsius (°C) angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar.

Alle physikalischen Eigenschaften werden und wurden nach "Merck Liquid Crystals, Physical Properties of Liquid Crystals", Status Nov. 1997, Merck KGaA, Darmstadt, Deutschland bestimmt und gelten für eine Temperatur von 20°C und Δn wird bei 589 nm und Δε bei 1 kHz bestimmt, sofern nicht jeweils explizit anders angegeben.

Die flüssigkristallinen Eigenschaften der Einzelverbindungen werden, soweit nicht anders angegeben, in der nematischen Wirtsmischung ZLI-4792 (kommerziell erhältlich von Merck KGaA, Darmstadt) bei einer Konzentration von 10% bestimmt.

"Raumtemperatur" bedeutet 20°C, falls nicht anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben. In den Beispielen kann auch, wie allgemein üblich, die optische Schwelle für 10 % relativen Kontrast (V₁₀) angegeben werden.

Die zur Messung der kapazativen Schwellenspanung V₀ sowie für V₁₀ verwendeten Testzellen sind aufgebaut aus Substraten bestehend aus Natriumglas (Sodalime Glas), die mit Polyimidorientierungsschichten (Durimid 32 mit Verdünner (70 % NMP + 30 % Xylol) im Verhältnis 1:4) der Firma Arch Chemicals beschichtet sind, welche antiparallel zueinander gerieben sind und einen Oberflächentilt von quasi 0 Grad aufweisen. Die Fläche der durchsichtigen, nahezu quadratischen Elektroden aus ITO, beträgt 1 cm². Zur Bestimmung der kapazativen Schwellenspannung wird ein handelsübliches hochauflösendes LCR Meter (z.B. LCR Meter 4284A der Firma Hewlett Packard) eingesetzt.

### Beispiel 1: 4'-(4-Pent-1-inyl-phenyl)-4-propyl-bicyclohexyl

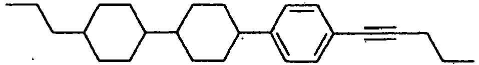

Die erfindungsgemäße Verbindung 4'-(4-Pent-1-inyl-phenyl)-4-propyl-bicyclohexyl wird hergestellt wie nachfolgend beschrieben:

### Synthese von 4-(4-Brom-phenyl)-4'-propyl-bicyclohexyl-4-ol

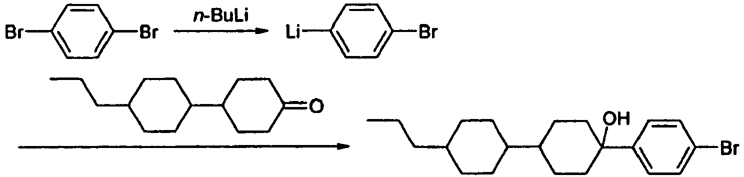

106 g (0,45 mol) 1,4-Dibrombenzol werden in 400 ml Et₂O bei -45 °C vorgelegt, und 275 ml (0,45 mol) n-BuLi (15% Lsg. in Hexan) werden zudosiert. Nach 30 min bei dieser Temperatur wird eine Lösung von 100 g (0,45 mol) 4'-Propyl-bicyclohexyl-4-on in 200 ml Et₂O zugetropft, und die Mischung wird bis auf 0 °C erwärmt. Nach 1 h wird der Ansatz mit Wasser und verd. Salzsäure versetzt, und die organische Phase wird abgetrennt. Die wässrige Phase wird mit MTBE extrahiert, und die vereinigte organische Phase wird mit Wasser gewaschen und anschließend mit Natriumsulfat getrocknet. Die Lösung wird vollständig konzentriert, und der Rückstand wird ohne weitere Reinigung für die folgende Reaktion verwendet.

### Synthese von 4-(4-Brom-phenyl)-4'-propyl-bicyclohexyl-3-en:

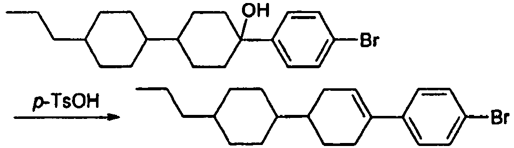

184 g (ca. 0,45 mol) rohes 4-(4-Brom-phenyl)-4'-propyl-bicyclohexyl-4-ol werden zusammen mit 5,6 g (29,2 mmol) p-Toluolsulfonsäuremonohydrat in 900 ml Toluol am Wasserabscheider erhitzt. Die Lösung wird mehrfach mit Wasser gewaschen und mit Natriumsulfat getrocknet. Das nach Entfernen des Lösungsmittels verbleibende Rohprodukt wird bei -20 °C aus Ethylacetat umkristallisiert. Auf diese Weise wird 4-(4-Brom-phenyl)-4'-propyl-bicyclohexyl-3-en als leicht gelber Feststoff erhalten.

### Synthese von 4'-(4-Brom-phenyl)-4-propyl-bicyclohexyl:

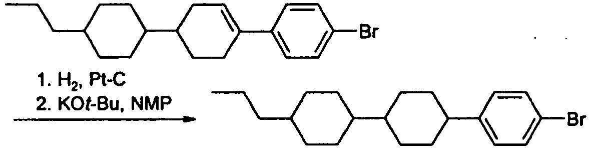

86 g (0,24 mol) 4-(4-Brom-phenyl)-4'-propyl-bicyclohexyl-3-en werden in 5 l *n*-Heptan in Gegenwart von Pt-C (5% Pt) bei Raumtemperatur und 1 bar Wasserstoffdruck hydriert. Die Reaktionslösung wird um die Hälfte konzentriert und über Kieselgel (SiO₂) absorptiv filtriert. Das Filtrat wird vollständig konzentriert.

Der Rückstand wird in 200 ml NMP aufgenommen und 13,4 g (0,12 mol) Kalium-*tert*-butylat werden zugegeben. Die Mischung wird 48 h auf 60 °C erwärmt. Nach dem Abkühlen wird der Ansatz auf Eis gegeben und mit verd. Salzsäure sauer gestellt. Das Gemisch wird mehrfach mit Pentan extrahiert, und die vereinigten organischen Phasen werden mit Wasser gewaschen. Die Lösung wird mit Natriumsulfat getrocknet und vollständig konzentriert. Das Rohprodukt wird aus Isopropanol umkristallisiert. Auf diese Weise wird 4'-(4-Brom-phenyl)-4-propyl-bicyclohexyl als beige Feststoff erhalten.

### Synthese von 4'-(4-Pent-1-inyl-phenyl)-4-propyl-bicyclohexyl:

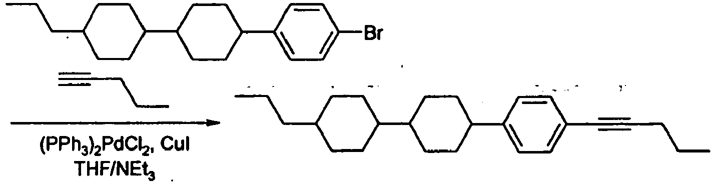

8,0 g (22,0 mmol) 4'-(4-Brom-phenyl)-4-propyl-bicyclohexyl werden in 80 ml NEt₃ zusammen mit 4,4 ml (44,0 mmol) 1-Pentin in Gegenwart von 309 mg (0,44 mmol) Bis(triphenylphosphin)-palladium(II)-chlorid und 42 mg (0,22 mmol) Kupfer(I)-iodid 60 h bei 60 °C gerührt. Der Ansatz wird auf Eiswasser gegeben und mit Salzsäure angesäuert. Die Mischung wird mit MTBE extrahiert, und die vereinigte organische Phase wird mit Wasser und ges. Natriumchloridlösung gewaschen. Die Lösung wird vollständig konzentriert, und das Rohprodukt wird säulenchromatographisch (SiO₂, *n*-Heptan) gereinigt. Die weitere Reinigung erfolgt durch Umkristallisation aus *n*-Heptan (-20 °C). Auf diese Weise wird 4'-(4-Pent-1-inyl-phenyl)-4-propyl-bicyclohexyl als farbloser Feststoff (Schmp. 47 °C) erhalten.

**¹H-NMR** (300 MHz, CHCl₃): δ = 7,30 (d, 2H, J = 8,4 Hz, H_{*arom*.}),7,10 (d, 2H, J = 8,4 Hz, H_{*arom*.}), 2,46-2,33 (m, 3H, H*_{benzyl}*, H*_{propargyl},* 1,93-1,69 (m, 8H, H_{*aliph*.}), 1,76-1,55 (m, 2H, H*_{aliph.}*), 1,47-1,23 (m, 4H, H*_{aliph.}*), 1,21-0,98 (m, 12H, H*_{aliph.}*), 0,95-0,80 (m, 5H, *Hₐₗᵢₚₕ*.).

**MS (EI)**: m/z(%) = 350 (100, M⁺).
Δε = +2,3
Δn = 0,1620
γ₁ = 782 mPa·s
K 47 SmB 154 SmA 160 N 211 I

Die erfindungsgemäße Verbindung 4'-(4-Pent-1-inyl-phenyl)-4-propyl-bicyclohexyl kann auch durch die *Kumada-Corriu* Reaktion [L.-M- Yang, L.-F. Huang, T.-Y. Luh, Org. Lett. 2004, 6, 1461-1463] von 4'-(4-Ethinyl-phenyl)-4-propyl-bicyclohexyl (Synthese siehe Beispiel 2) mit Propyliodid hergestellt werden.

### Beispiel 2: (entfällt)

### Beispiel 3: 4-Propyl-4'-(4-prop-1-inyl-phenyl)-bicyclohexyl

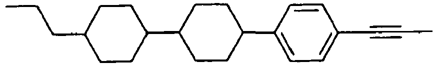

Die erfindungsgemäße Verbindung 4-Propyl-4'-(4-prop-1-inyl-phenyl)-bicyclohexyl wird hergestellt wie nachfolgend beschrieben:

### Synthese von 4-Propyl-4'-(4-prop-1-inyl-phenyl)-bicyclohexyl :

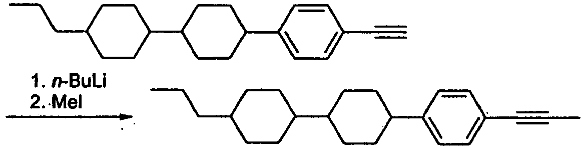

3,0 g (9,7 mmol) 4'-(4-Ethinyl-phenyl)-4-propyl-bicyclohexyl werden in 25 ml THF bei -20 °C vorgelegt, und 7,3 ml (11,7 mmol) *n*-BuLi (15% Lsg. in Hexan) werden zugetropft. Nach 1 h bei dieser Temperatur wird 0,73 ml (11,7 mmol) Methyliodid zudosiert, und der Ansatz wird für 3 h unter Auftauen im Kühlbad belassen: Wasser und verd. Salzsäure werden zugegeben, und die Mischung wird mehrfach mit MTBE extrahiert. Die vereinigten organischen Phasen werden mit Wasser und ges. Natriumchloridlsg. gewaschen, und die Lösung wird mit Natriumsulfat getrocknet. Das nach Entfernen der Lösungsmittel erhaltene Rohprodukt wird säulenchromatographisch (SiO₂, *n*-Heptan) gereinigt. Die weitere Reinigung erfolgt durch Umkristallisieren aus *n*-HeptanAuf diese Weise wird 4-Propyl-4'-(4-prop-1-inyl-phenyl)-bicyclohexyl als farbloser Feststoff mit einem Schmp. von 82 °C erhalten.

**¹H-NMR** (400 MHz, CHCl₃): δ = 7,29 (d, 2H, J = 8,0 Hz, H*_{arom.}*), 7,10 (d, 2H, J = 8,0 Hz, H*_{arom.}*), 2,45-2,37 (m, 1H, H_{b*enzyl*}), 2,03 (s, 3H, ≡**CH₃**), 1,92-1,80 (m, 4H, *H*_{*aliph*.}), 1,79-1,68 (m, 4H, *H*_{*aliph*.}), 1,45-1,25 (m, 4H, H_{*aliph*.}), 1,20-0,94 (m, 9H, H*_{aliph.}*), 0,95-0,80 (m, 5H, *H*_{*aliph*.}).

**MS (EI):** m/z(%) = 322 (100, M⁺).
Δε = +3,2
Δn = 0,1875
γ₁ = 1720 mPa·s
K 85 N 255 I

Die erfindungsgemäße Verbindung aus Beispiel (3) zeigt gegenüber den strukturanalogen Verbindungen aus Vergleichsbeispiele 1 und 2 einen deutlich höheren Klärpunkt, eine breitere nematische Phase, eine höhere Doppelbrechung und eine höhere dielektrische Anisotropie.

### Vergleichsbeispiel 1: 4'-(4-Propyl-phenyl)-4-prop-1-inyl-bicyclohexyl

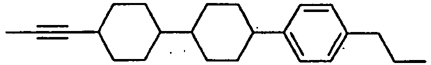

Die Vergleichsverbindung 4'-(4-Pent-1-inyl-phenyl)-4-propyl-bicyclohexyl wird hergestellt wie nachfolgend beschrieben:

### Synthese von 4-(1,4-Dioxa-spiro[4.5]dec-8-yl)-1-(4-propyl-phenyl)-cyclohexanol:

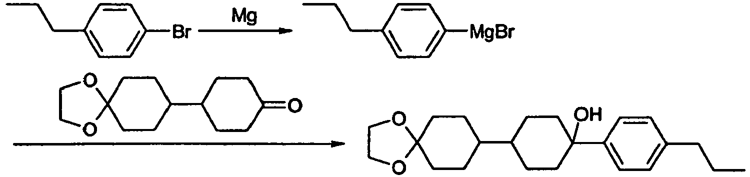

Eine Lösung des aus 147 g (0,74 mol) p-Brompropylbenzol und 18,0 g (0,74 mol) Magnesiumspänen erzeugten Grignardreagenzes (400 ml THF) wird mit einer Lösung von 160 g (0,67 mol) 4-(1,4-Dioxa-spiro[4.5]dec-8-yl)-cyclohexanon in 600 ml THF versetzt. Nach beendeter Zugabe wird 1 h zum Rückfluß erhitzt, und ges. Ammoniumchloridlsg. wird zugegeben. Die Mischung wird mit verd. Salzsäure angesäuert und mehrfach mit MTBE extrahiert. Die vereinigten organischen Phasen werden mit Wasser gewaschen, und die Lösung wird mit Natriumsulfat getrocknet. Das nach Entfernen der Lösungsmittel erhaltene Rohprodukt wird ohne weitere Reinigung verwendet.

### Synthese von 8-[4-(4-Propyl-phenyl)-cyclohex-3-enyl]-1,4-dioxa-spiro[4.5]decan:

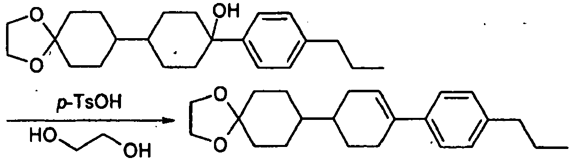

250 g rohes (ca. 0,7 mol) 4-(1,4-Dioxa-spiro[4.5]dec-8-yl)-1-(4-propylphenyl)-cyclohexanol werden zusammen mit 13,2 g (69 mmol) *p*-Toluolsulfonsäuremonohydrat und 40,7 ml (0,73 mol) Ethylenglycol in 800 ml Toluol am Wasserabscheider erhitzt. Die Lösung wird mehrfach mit Wasser gewaschen und mit Natriumsulfat getrocknet. Das nach Entfernen des Lösungsmittels verbleibende Rohprodukt wird chromatographisch (SiO₂, *n*-Heptan : MTBE = 5 : 1) gereinigt. 8-[4-(4-Propyl-phenyl)-cyclohex-3-enyl]-1,4-dioxa-spiro[4.5]decan wird als farbloser Feststoff erhalten.

### Synthese von 8-[4-(4-Propyl-phenyl)-cyclohexyl]-1,4-dioxa-spiro[4.5]decan:

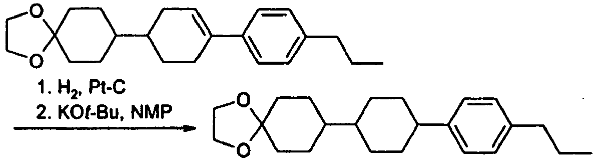

198 g (0,57 mol) 8-[4-(4-Propyl-phenyl)-cyclohex-3-enyl]-1,4-dioxa-spiro[4.5]decan werden in *n*-Heptan in Gegenwart von Pt-C (5% Pt) hydriert. Die Reaktionslösung wird vollständig konzentriert, und der Rückstand wird säulenchromatographisch (SiO₂, *n*-Heptan : MTBE = 5 : 1) gereinigt.

Das oben erhaltene Produkt wird in NMP aufgenommen und 32 g (0,29 mol) Kalium-*tert*-butylat werden zugegeben. Die Mischung wird 18 h auf 60 °C erwärmt. Nach dem Abkühlen wird der Ansatz auf Eis gegeben und mit Salzsäure angesäuert. Das Gemisch wird mehrfach mit MTBE extrahiert, und die vereinigten organischen Phasen werden mit Wasser gewaschen. Die Lösung wird mit Natriumsulfat getrocknet und vollständig konzentriert. Das Rohprodukt wird säulenchromatographisch (SiO₂, *n-*Heptan : MTBE = 5 : 1) gereinigt. 8-[4-(4-Propyl-phenyl)-cyclohexyl]-1,4-dioxa-spiro[4.5]decan wird als bräunlicher Feststoff erhalten.

### Synthese von 4'-(4-Propyl-phenyl)-bicyclohexyl-4-on:

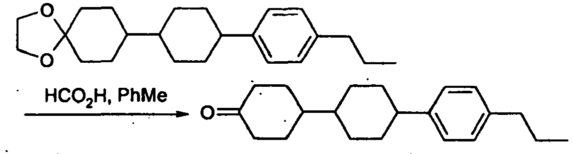

190,5 g (0,55 mol) 8-[4-(4-Propyl-phenyl)-cyclohexyl]-1,4-dioxa-spiro[4.5]decan werden zusammen mit 480 ml Ameisensäure in 900 ml Toluol 19 h kräftig gerührt. Wasser wird zugegeben, und die organische Phase wird abgetrennt. Die wässrige Phase wird mit MTBE extrahiert und die vereinigte organische Phase wird nacheinander mit Wasser, ges. Natriumhydrogencarbonatlösung und ges. Natriumchloridlösung gewaschen. Die Lösung wird mit Natriumsulfat getrocknet und vollständig konzentriert. Das Rohprodukt wird aus *n*-Heptan umkristallisiert.

### Synthese von 4-Methoxymethylen-4'-(4-propyl-phenyl)-bicyclohexyl:

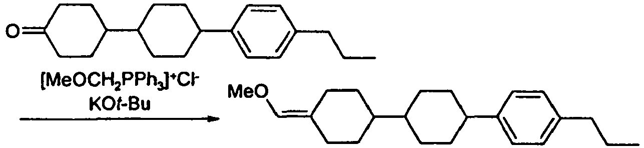

Eine Suspension von 170,0 g (0,50 mol) Methoxymethyltriphenylphosphoniumchlorid in 550 ml THF wird bei 0 °C mit einer Lösung von 55,0 g (0,50 mol) Kalium-tert-butylat in 250 ml THF versetzt. Nach 30 min bei dieser Temperatur wird eine Lösung von 4'-(4-Propyl-phenyl)-bicyclohexyl-4-on in 450 ml THF zugegeben, und die Mischung wird 17 h bei Raumtemperatur gerührt. Der Ansatz wird mit Wasser versetzt und mit Salzsäure angesäuert. Die Mischung wird mehrfach mit MTBE extrahiert, und die vereinigten organischen Phasen werden mit Wasser und gesättigter Natriumchloridlösung gewaschen. Die Lösung wird vollständig konzentriert, und der Rückstand wird säulenchromatographisch (SiO₂, *n-*Heptan : MTBE = 8 : 1) gereinigt.

### Synthese von 4'-(4-Propyl-phenyl)-bicyclohexyl-4-carbaldehyd:

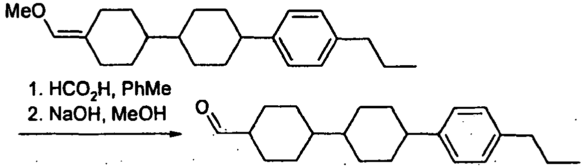

152,5 g (0,45 mol) 4-Methoxymethylen-4'-(4-propyl-phenyl)-bicyclohexyl werden zusammen mit 275 ml Ameisensäure in 685 ml Toluol 80 h kräftig gerührt. Wasser wird zugegeben, und die organische Phase wird abgetrennt. Die wässrige Phase wird mit MTBE extrahiert und die vereinigte organische Phase wird nacheinander mit Wasser, ges. Natriumhydrogencarbonatlösung und ges. Natriumchloridlösung gewaschen. Die Lösung wird mit Natriumsulfat getrocknet und vollständig konzentriert.

Das so erhaltene Produkt wird in 1000 ml Methanol und 25 ml THF aufgenommen, und die Lösung wird mit 17,5 ml (0,11 mol) 20% Natronlauge versetzt. Nach 2 h wird die Lösung auf 0 °C abgekühlt, und der ausfallende Feststoff wird abgesaugt. Der Filterrückstand wird mit Methanol gewaschen, und das Rohprodukt wird aus Isopropanol umkristallisiert. 4'-(4-Propyl-phenyl)-bicyclohexyl-4-carbaldehyd wird als farbloser Feststoff erhalten.

### Synthese von 4-(2,2-Dibrom-vinyl)-4'-(4-propyl-phenyl)-bicyclohexyl:

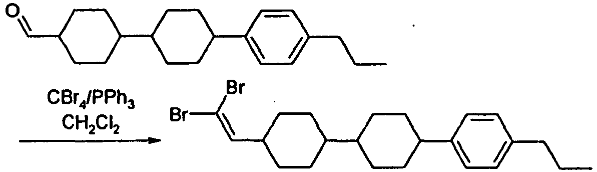

34,0 g (0,10 mol) Tetrabromkohlenstoff werden in 120 ml Dichlormethan vorgelegt, und 53,7 g (0,21 mol) Triphenylphopshin werden portionsweise zudosiert. Nach beendeter Zugabe wird 30 min gerührt, und eine Suspension von 16,0 g (51,2 mmol) 4'-(4-Propyl-phenyl)-bicyclohexyl-4-carbaldehyd in 45 ml Dichlormethan wird langsam zugegeben. Die Mischung wird 22 h gerührt, und der ausgefallene Niederschlag wird abfiltriert. Das Filtrat wird vollständig konzentriert, und der Rückstand wird säulenchromatographisch (SiO₂, *n*-Heptan) gereinigt. 4-(2,2-Dibrom-vinyl)-4'-(4-propyl-phenyl)-bicyclohexyl wird als farbloser Feststoff erhalten.

### Synthese von 4-Ethinyl-4'-(4-propyl-phenyl)-bicyclohexyl:

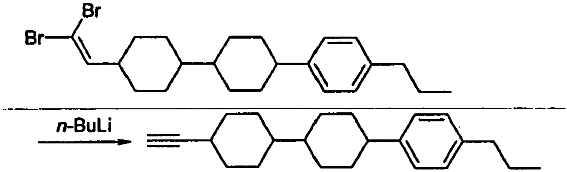

7,70 g (16,4 mmol) 4-(2,2-Dibrom-vinyl)-4'-(4-propyl-phenyl)-bicyclohexyl in 40 ml THF werden bei -75 °C mit 23,7 ml (38,0 mmol) *n*-BuLi versetzt. Nach beendeter Zugabe wird die Mischung 2 h bei dieser Temperatur gerührt und anschließend bis auf -20 °C erwärmt. Wasser und verd. Salzsäure werden zugegeben, und der Ansatz wird mehrfach mit MTBE extrahiert. Die vereinigten organischen Phasen werden mit Wasser und ges. Natriumchloridlösung gewaschen und mit Natriumsulfat getrocknet. Die Lösung wird vollständig konzentriert, und der Rückstand wird säulenchromatographisch (SiO₂, *n*-Heptan : 1-Chlorbutan = 95 : 5) gereinigt. 4-Ethinyl-4'-(4-propyl-phenyl)-bicyclohexyl wird als farbloser Feststoff erhalten.

### Synthese von 4'-(4-Propyl-phenyl)-4-prop-1-inyl-bicyclohexyl:

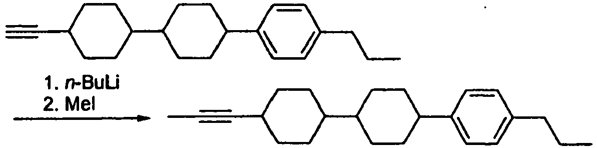

3,5 g (11,3 mmol) 4-Ethinyl-4'-(4-propyl-phenyl)-bicyclohexyl werden in 30 ml THF bei -20 °C vorgelegt, und 8,6 ml (13,6 mmol) *n*-BuLi (15% Lsg. in Hexan) werden zugetropft. Nach 1 h bei dieser Temperatur wird 0,85 ml (13,6 mmol) Methyliodid zudosiert, und der Ansatz wird für 3 h unter Auftauen im Kühlbad belassen. Wasser und verd. Salzsäure werden zugegeben, und die Mischung wird mehrfach mit MTBE extrahiert. Die vereinigten organischen Phasen werden mit Wasser und ges. Natriumchloridlsg. gewaschen, und die Lösung wird mit Natriumsulfat getrocknet. Das nach Entfernen der Lösungsmittel erhaltene Rohprodukt wird säulenchromatographisch (SiO₂, *n*-Heptan : 1-Chlorbutan = 4 : 1) gereinigt. Die weitere Reinigung erfolgt durch Umkristalliseren aus *n-*Heptan. Auf diese Weise wird 4'-(4-Propyl-phenyl)-4-prop-1-inylbicyclohexyl als farbloser Feststoff mit einem Schmp. von 70 °C erhalten.

**¹H-NMR** (300 MHz, CHCl₃): δ = 7,13-7,06 (m, 4H, H*ₐᵣₒₘ*.), 2,54 (t, 2H, J = 8,0 Hz, **CH₂**(*benzyl*.)), 2,45-2,35 (m, 1 H, H*_{benzyl}*), 1,85-1,70 (m, 7H, ≡**CH₃** u. H*_{aliph.}*), 1,69-1,52 (m, 4H, H_{*aliph*.}), 1,48-1,23 (m, 4H, H*_{aliph.}*)*,* 1,19-0,90 (m, 12H, H_{*aliph*.}).

**MS (EI):** m/z(%) = 322 (100, M⁺).
Δε = +1,8
Δn = 0,139
γ₁ = 1006 Pa·s
K 70 SmB 103 N 191 I

Die Verbindung hat im Vergleich zur Beispielverbindung 3 schlechtere Eigenschaften. Der Klärpunkt ist niedriger und das Rotationsviskosität- zu Klärpunktverhältnis schlechter. Insbesondere ist die Verbindung des Vergleichsbeispiels über einen weiten Temperaturbereich smektisch.

### Vergleichsbeispiel 2: 1-(4-Ethinyl-cyclohexyl)-4-(4-propyl-cyclohexyl)-benzol

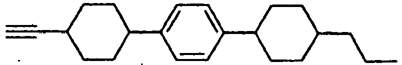

Die Synthese von 1-(4-Ethinyl-cyclohexyl)-4-(4-propyl-cyclohexyl)-benzol wird ausgehend von 1-Brom-4-(4-propyl-cyclohexyl)-benzol und 1,4-Dioxa-spiro[4.5]decan-8-on analog zum Vergleichsbeispiel 1 durchgeführt. Dabei wird mit den entsprechenden Ausgangsmaterialien und Zwischenstufen wie oben beschrieben verfahren.

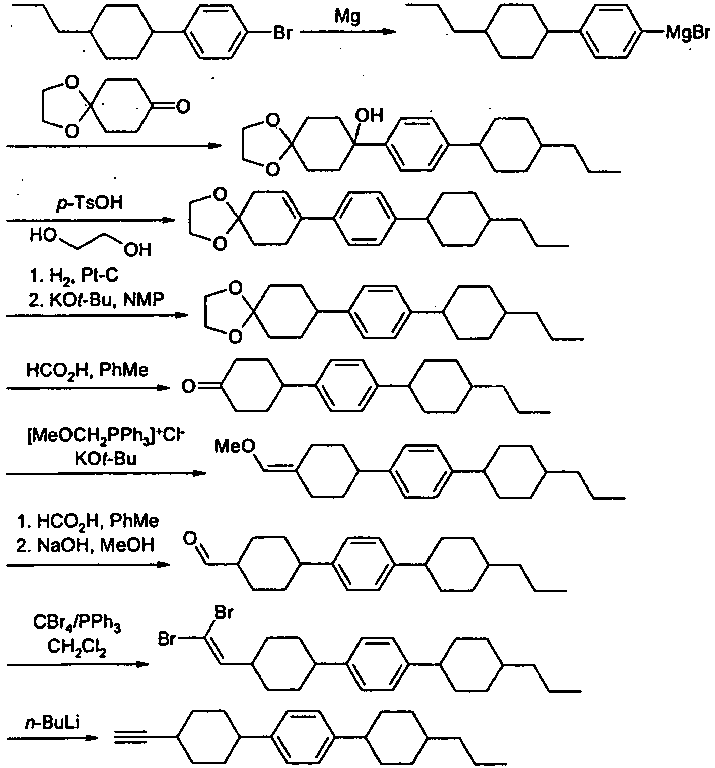

1-(4-Ethinyl-cyclohexyl)-4-(4-propyl-cyclohexyl)-benzol wird als farbloser Feststoff mit einem Schmp. von 143 °C erhalten.

**¹H-NMR** (300 MHz, CHCl₃): δ = 7,14-7,08 (m, 4H, H*_{arom.}*), 2,52-2,36 (m, 2H, H*_{benzyl}*), 2,34-2,36 (m, 1 H, H_{*propargyl*.}), 2,15-2,05 (m, 3H, H*_{alkinyl.}* + H*_{aliph.}*), 1,95-1,80 (m, 6H, H*_{aliph.}*), 1,61-1,16 (m, 11H, H*_{aliph.}*), 1,11-0,96 (m, 2H, H*_{aliph.}*), 0,90 (t, 3H, J= 7,2 Hz, CH₃).

**MS (EI)**: m/z(%) = 308 (63, M⁺), 280 (100, M⁺).
Δε = +1,7
Δn = 0,1209
γ₁ = 480 Pa·s
K 143 N 168 I

Die Verbindung hat einen niedrigeren Klärpunkt als Beispielverbindung 3 und eine deutlich schmälere nematische Phase. Der hohe Schmelzpunkt weist auf eine schlechtere Löslichkeit in nematischen Medien hin.

### Vergleichsbeispiel 3:1-(4-Propyl-cyclohexyl)-4-(4-prop-1-inyl-cyclohexyl)-benzol

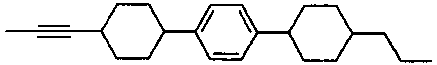

Die Synthese von 1-(4-Propyl-cyclohexyl)-4-(4-prop-1-inyl-cyclohexyl)-benzol wird ausgehend von 1-Brom-4-(4-propyl-cyclohexyl)-benzol analog zum Vergleichsbeispiel 1 durchgeführt.

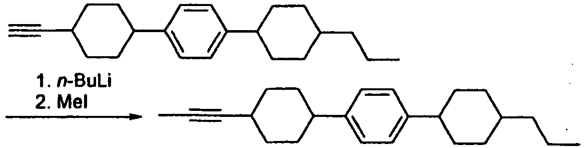

1-(4-Propyl-cyclohexyl)-4-(4-prop-1-inyl-cyclohexyl)-benzol wird als farbloser Feststoff mit einem Schmp. von 134 °C erhalten.

**¹H-NMR** (400 MHz, CHCl₃): δ = 7,14-7,07 (m, 4H, H_{*arom*.}), 2,50-2,36 (m, 2H, H*_{benzyl}*), 2,27-2,15 (m, 1H, H_{*propargyl*.}), 2,09-2,01 (m, 2H, H_{*aliph*.}), 1,92-1,78 (m, 6H, H*_{aliph.}*), 1,53-1,16 (m, 14H, *Hₐₗᵢₚₕ*.), 1,09-0,96 (m, 2H, *H*_{*aliph*.}). 0,90 (t, 3H, J = 7,2 Hz, CH₃).

**MS (EI):** m/z(%) = 322 (48, M⁺), 294 (100, M⁺).
Δε = +1,1
Δn= 0,1337
γ₁ = 1003 Pa·s
K 134 N 193 I

Die Verbindung hat bei annähernd gleicher Rotationsviskosität einen deutlich niedrigeren Klärpunkt als Beispielverbindung 3. Weiterhin ist der nematische Phasenbereich sehr viel kleiner. Der hohe Schmelzpunkt weist auf eine schlechtere Löslichkeit in nematischen Medien hin.

## Patentansprüche

1. Verbindungen der Formel I 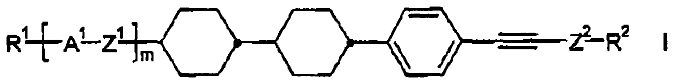 worin die einzelnen Reste folgende Bedeutung besitzen:
R¹ und R² jeweils unabhängig voneinander Alkyl mit 1 bis 5 C-Atomen,
A¹ bei jedem Auftreten gleich oder verschieden Phenylen-1,4-diyl, worin auch eine oder zwei CH-Gruppen durch N ersetzt sein können und ein oder mehrere H-Atome durch Halogen, CN, CH₃, CHF₂, CH₂F, OCH₃, OCHF₂ oder OCF₃ ersetzt sein können, Cyclohexan-1,4-diyl, worin auch eine oder zwei nicht benachbarte CH₂-Gruppen unabhängig voneinander durch O und/oder S ersetzt sein können, und ein oder mehrere H-Atome durch F ersetzt sein können, Cyclohexen-1,4-diyl, Bicyclo[1.1.1]pentan-1,3-diyl, Bicyclo[2.2.2]octan-1,4-diyl, Spiro[3.3]heptan-2,6-diyl, Tetrahydropyran-2,5-diyl, oder 1,3-Dioxan-2,5-diyl,
Z¹ und Z² eine Einfachbindung, und
m 0, 1, 2 oder 3.

2. Verbindungen nach Anspruch 1, **dadurch gekennzeichnet, dass** m 0 oder 1 bedeutet.

3. Verbindungen nach Anspruch 1 oder 2, **dadurch gekennzeichnet, dass** A¹ ausgewählt ist aus folgenden Resten:

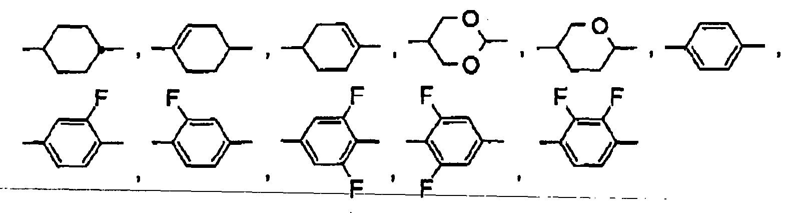

4. Verbindungen nach einem oder mehreren der Ansprüche 1 bis 3, **dadurch gekennzeichnet, dass**
R² Alkyl mit 1 bis 3 C-Atomen
bedeutet.

5. Verbindungen nach einem oder mehreren der Ansprüche 1 bis 4, **dadurch gekennzeichnet, dass** R² Methyl bedeutet.

6. Verbindungen nach einem oder mehreren der Ansprüche 1 bis 5, ausgewählt aus der Gruppe bestehend aus folgenden Formeln: 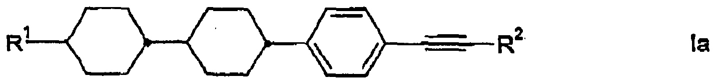 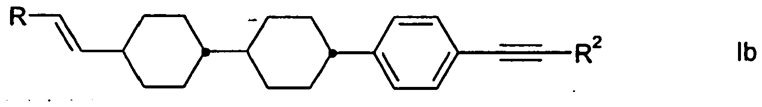 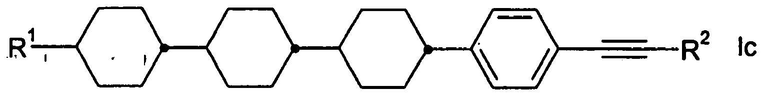 worin R¹ und R² die in Anspruch 1 angegebenen Bedeutungen besitzen, und R H oder Alkyl mit 1 bis 4 C-Atomen bedeutet.

7. FK-Medium enthaltend eine oder mehrere Verbindungen nach einem oder mehreren der Ansprüche 1 bis 6.

8. FK-Medium nach Anspruch 7, **dadurch gekennzeichnet, dass** es zusätzlich eine oder mehrere Verbindungen der Formel II und/oder III enthält: 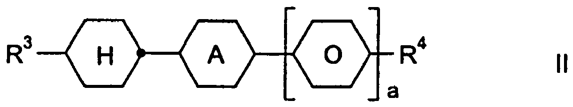 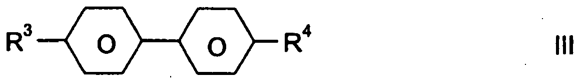 worin
A 1,4-Phenylen oder trans-1,4-Cyclohexylen bedeutet,
a 0 oder 1 ist,
R³ Alkenyl mit 2 bis 9 C-Atomen bedeutet, und
R⁴ Alkyl mit 1 bis 12 C-Atomen, wobei auch eine oder zwei nicht benachbarte CH₂-Gruppen durch -O-, -CH=CH-, -CO-, -OCO-oder -COO- so ersetzt sein können, dass O-Atome nicht direkt miteinander verknüpft sind, bedeutet.

9. FK-Medium nach Anspruch 7 oder 8, **dadurch gekennzeichnet, dass** es zusätzlich eine oder mehrere Verbindungen ausgewählt aus der Gruppe bestehend aus folgenden Formeln enthält 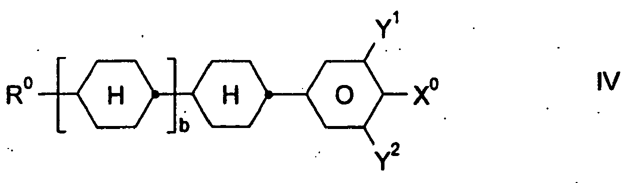 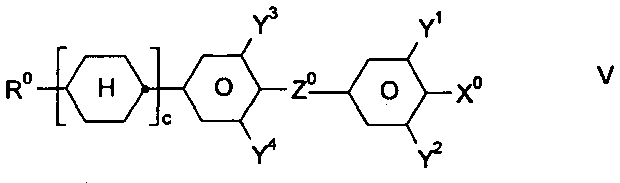 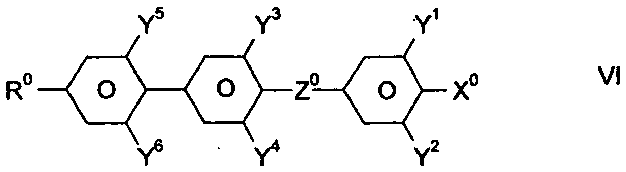 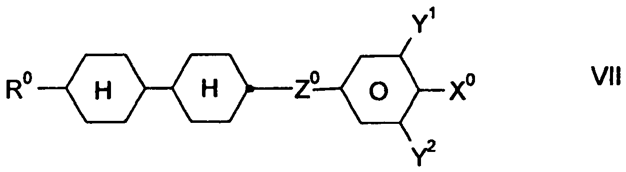 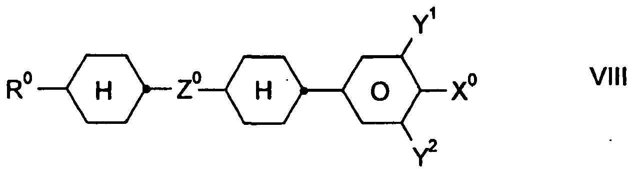 worin
R⁰ einen Alkyl- oder Alkoxyrest mit 1 bis 15 C-Atomen, wobei in diesen Resten auch eine oder mehrere CH₂-Gruppen jeweils unabhängig voneinander durch -C≡C-, -CF₂O-, -CH=CH-, 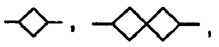 -O-, -CO-O- oder -O-CO- so ersetzt sein können, dass O-Atome nicht direkt miteinander verknüpft sind, und worin auch ein oder mehrere H-Atome durch Halogen ersetzt sein können,
X⁰, F, Cl, CN, SF₅, SCN, NCS, einen halogenierten Alkylrest, halogenierten Alkenylrest, halogenierten Alkoxyrest oder halogenierten Alkenyloxyrest mit jeweils bis zu 6 C-Atomen,
Y¹⁻⁶ jeweils unabhängig voneinander H oder F,
Z⁰ -C₂H₄-, -(CH₂)₄-, -CH=CH-, -CF=CF-, -C₂F₄-, -CH₂CF₂-, -CF₂CH₂-, -CH₂O-, -OCH₂-, -(CO)O-, -CF₂O- oder -OCF₂-, in den Formeln V und VI auch eine Einfachbindung, und
b und c jeweils unabhängig voneinander 0 oder 1
bedeuten.

10. FK-Anzeige enthaltend ein FK-Medium oder eine oder mehrere Verbindungen nach einem oder mehreren der Ansprüche 1 bis 9.

11. FK-Anzeige nach Anspruch 10, **dadurch gekennzeichnet, dass** sie eine MFK-, TN-, STN- oder IPS-Anzeige ist.

12. Verfahren zur Herstellung von Verbindungen der Formel I gemäß einem oder mehreren der Ansprüche 1 bis 6, enthaltend folgende Schritte
a) Metallierung von 1,4-Dihalogenbenzol an einer Halogenposition,
b) Addition der in Schritt a) erhaltenen metallorganischen Verbindung an ein Keton der folgenden Formel 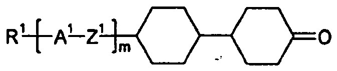
c) Wasserabspaltung aus dem in Schritt b) erhaltenen Alkohol,
d) Hydrierung des in Schritt c) erhaltenen Alkens,
e) optional Isomerisierung des in Schritt d) erhaltenen Gemisches zum bevorzugten Isomer (trans-traris-Isomer der Bicyclohexylgruppe) der folgenden Formel 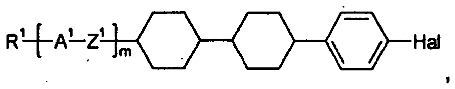
f1) Sonogashira-Kupplung der in Schritt e) erhaltenen Halogenverbindung mit einem geeigneten Alkin der Formel HC≡C-Z²-R², worin R² und Z² die in Anspruch 1 angegebene Bedeutung haben,
oder
f2) Sonogashira-Kupplung der in Schritt e) erhaltenen Halogenverbindung mit Trialkylsilyacetylen,
g2) Desilylierung des in Schritt f2) erhaltenen Acetylens,
h2) Deprotonierung des in Schritt g2) terminalen Acetylens mit einer Base,
i2) Alkylierung des in Schritt h2) erhaltenenen Acetylids mit einem Alkylierungsmittel, zum Beispiel einem Alkyljodid der Formel R²-I,
oder
i3) Umsetzung des in Schritt h2) erhaltenenen Acetylids mit einem Halogenalkan in einer *Kumada-Corriu* Reaktion,
wobei R¹, A¹ und Z¹ die in Anspruch 1 angegebene Bedeutung haben und Hal Halogen bedeutet.

## Claims

1. Compounds of the formula I 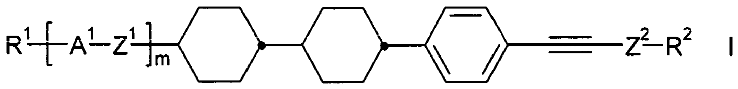 in which the individual radicals have the following meanings:
R' and R² each, independently of one another, denote alkyl having 1 to 5 C atoms,
A¹ on each occurrence, identically or differently, denotes phenylene-1,4-diyl, in which, in addition, one or two CH groups may be replaced by N and one or more H atoms may be replaced by halogen, CN, CH₃, CHF₂, CH₂F, OCH₃, OCHF₂ or OCF₃, cyclohexane-1,4-diyl, in which, in addition, one or two non-adjacent CH₂ groups may be replaced, independently of one another, by O and/or S, and one or more H atoms may be replaced by F, cyclohexene-1,4-diyl, bicyclo[1.1.1]pentane-1,3-diyl, bicyclo[2.2.2]octane-1,4-diyl, spiro[3.3]heptane-2,6-diyl, tetrahydropyran-2,5-diyl or 1,3-dioxane-2,5-diyl,
Z¹ and Z² denote a single bond, and
m denotes 0, 1, 2 or 3.

2. Compounds according to Claim 1, **characterised in that** m denotes 0 or 1.

3. Compounds according to Claim 1 or 2, **characterised in that** A¹ is selected from the following radicals:

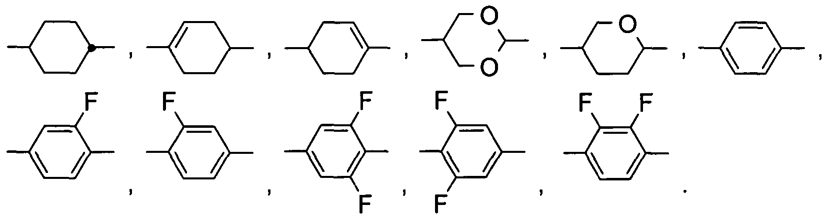

4. Compounds according to one or more of Claims 1 to 3, **characterised in that**
R² denotes alkyl having 1 to 3 C atoms.

5. Compounds according to one or more of Claims 1 to 4, **characterised in that** R² denotes methyl.

6. Compounds according to one or more of Claims 1 to 5, selected from the group consisting of the following formulae: 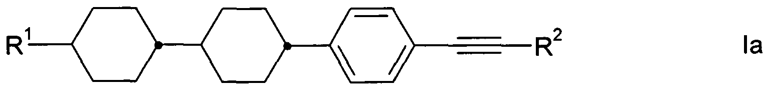 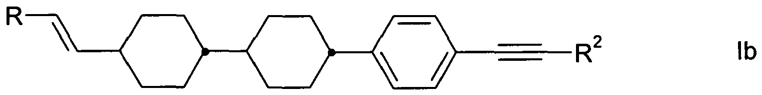 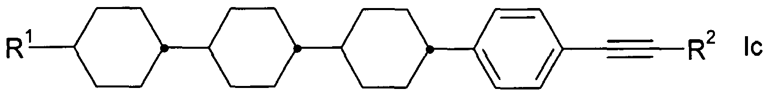 in which R¹ and R² have the meanings indicated in Claim 1, and R denotes H or alkyl having 1 to 4 C atoms.

7. LC medium comprising one or more compounds according to one or more of Claims 1 to 6.

8. LC medium according to Claim 7, **characterised in that** it additionally comprises one or more compounds of the formulae II and/or III: 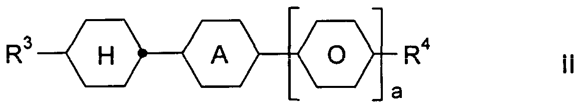 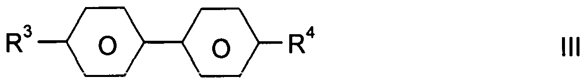 in which
A denotes 1,4-phenylene or trans-1,4-cyclohexylene,
a is 0 or 1,
R³ denotes alkenyl having 2 to 9 C atoms, and
R⁴ denotes alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another.

9. LC medium according to Claim 7 or 8, **characterised in that** it additionally comprises one or more compounds selected from the group consisting of the following formulae: 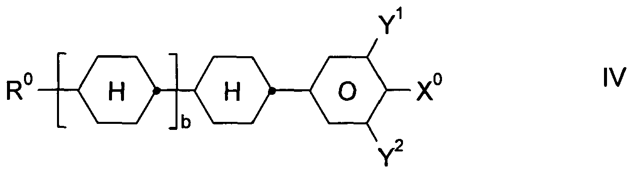 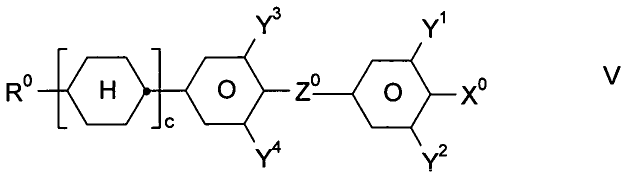 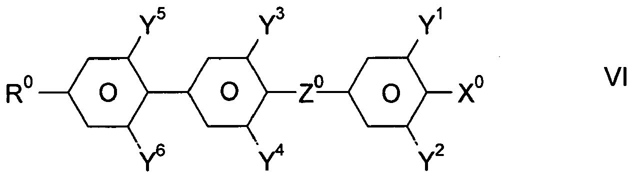 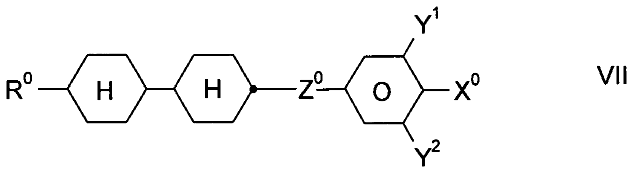 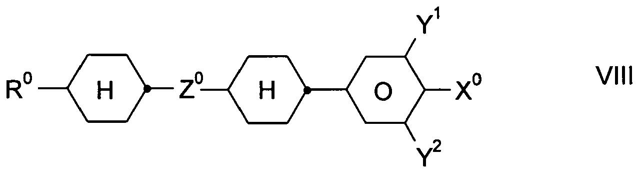 in which
R⁰ denotes an alkyl or alkoxy radical having 1 to 15 C atoms, where, in addition, one or more CH₂ groups in these radicals may each be replaced, independently of one another, by -C≡C-, -CF₂O-, -CH=CH-, 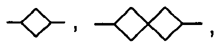 -O-, -CO-O- or -O-CO- in such a way that O atoms are not linked directly to one another, and in which, in addition, one or more H atoms may be replaced by halogen,
X⁰ denotes F, Cl, CN, SF₅, SCN, NCS, a halogenated alkyl radical, halogenated alkenyl radical, halogenated alkoxy radical or halogenated alkenyloxy radical, each having up to 6 C atoms,
Y¹⁻⁶ each, independently of one another, denote H or F,
Z⁰ denotes -C₂H₄-, -(CH₂)₄-, -CH=CH-, -CF=CF-, -C₂F₄-, -CH₂CF₂-, -CF₂CH₂-, -CH₂O-, -OCH₂-, -(CO)O-, -CF₂O- or -OCF₂-, in the formulae V and VI also a single bond, and
b and ceach, independently of one another, denote 0 or 1.

10. LC display containing an LC medium or one or more compounds according to one or more of Claims 1 to 9.

11. LC display according to Claim 10, **characterised in that** it is an MLC, TN, STN or IPS display.

12. Process for the preparation of compounds of the formula I according to one or more of Claims 1 to 6, comprising the following steps:
a) metallation of 1,4-dihalobenzene in one halogen position,
b) addition of the organometallic compound obtained in step a) onto a ketone of the following formula: 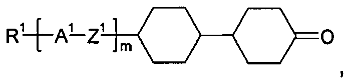
c) elimination of water from the alcohol obtained in step b),
d) hydrogenation of the alkene obtained in step c),
e) optionally isomerisation of the mixture obtained in step d) to give the preferred isomer (trans-trans isomer of the bicyclohexyl group) of the following formula: 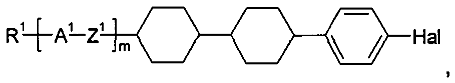
f1) *Sonogashira* coupling of the halogen compound obtained in step e) to a suitable alkyne of the formula HC≡C-Z²-R², in which R² and Z² have the meanings indicated in Claim 1,
or
f2) *Sonogashira* coupling of the halogen compound obtained in step e) to trialkylsilylacetylene,
g2) desilylation of the acetylene obtained in step f2),
h2) deprotonation of the terminal acetylene in step g2) using a base,
i2) alkylation of the acetylide obtained in step h2) using an alkylating agent, for example an alkyl iodide of the formula R²-I, or
i3) reaction of the acetylide obtained in step h2) with a haloalkane in a *Kumada-Corriu* reaction,
where R¹, A¹ and Z¹ have the meanings indicated in Claim 1, and Hal denotes halogen.

## Revendications

1. Composés de la formule I 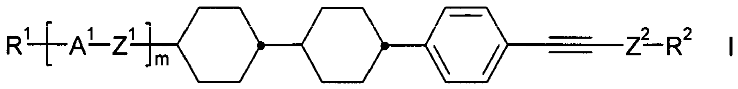 dans laquelle les radicaux individuels présentent les significations qui suivent:
R¹ et R² représentent, chacun indépendamment de l'autre, alkyle comportant de 1 à 5 atomes de C,
A¹ représente, pour chaque occurrence, de manière identique ou différente, phénylène-1,4-diyle, où, en outre, un ou deux groupes CH peut/peuvent être remplacé(s) par N et un ou plusieurs atomes de H peut/peuvent être remplacé(s) par halogène, CN, CH₃, CHF₂, CH₂F, OCH₃, OCHF₂ ou OCF₃, cyclohexane-1,4-diyle, où, en outre, un ou deux groupes CH non adjacents peut/peuvent être remplacé(s) par N et un ou deux groupes CH₂ non adjacents peut/peuvent être remplacé(s), indépendamment l'un de l'autre, par O et/ou S, et un ou plusieurs atomes de H peut/peuvent être remplacé(s) par F, cyclo-hexène-1,4-diyle, bicyclo[1.1.1]pentane-1,3-diyle, bicyclo[2.2.2]octane-1,4-diyle, spiro[3.3]heptane-2,6-diyle, tétrahydropyran-2,5-diyle ou 1,3-dioxane-2,5-diyle,
Z¹ et Z² représentent une liaison simple, et
m représente 0, 1, 2 ou 3.

2. Composés selon la revendication 1, **caractérisés en ce que** m représente 0 ou 1.

3. Composés selon la revendication 1 ou 2, **caractérisés en ce que** A¹ est choisi parmi les radicaux qui suivent :

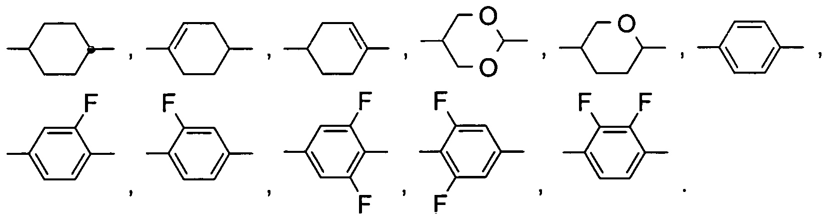

4. Composés selon une ou plusieurs des revendications 1 à 3, **caractérisés en ce que**
R² représente alkyle comportant de 1 à 3 atomes de C.

5. Composés selon une ou plusieurs des revendications 1 à 4, **caractérisés en ce que** R² représente méthyle.

6. Composés selon une ou plusieurs des revendications 1 à 5, choisis parmi le groupe constitué par les formules qui suivent : 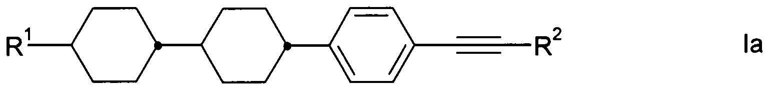 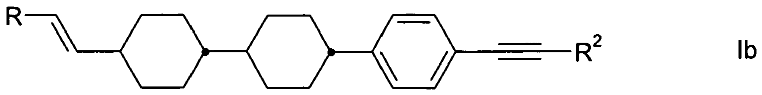 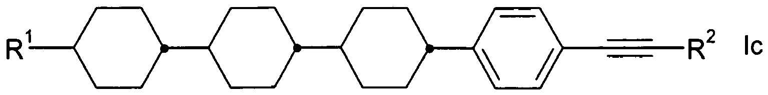 dans lesquelles R¹ et R² présentent les significations indiquées selon la revendication 1, et R représente H ou alkyle comportant de 1 à 4 atomes de C.

7. Milieu LC comprenant un ou plusieurs composés selon une ou plusieurs des revendications 1 à 6.

8. Milieu LC selon la revendication 7, **caractérisé en ce qu'**il comprend additionnellement un ou plusieurs composés des formules Il et/ou III: 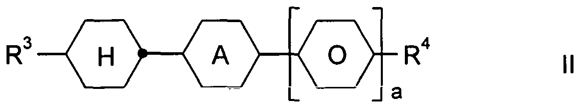 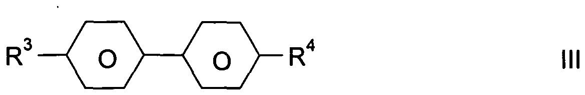 dans lesquelles
A représente 1,4-phénylène ou trans-1,4-cyclohexylène,
a est 0 ou 1,
R³ représente alkényle comportant de 2 à 9 atomes de C, et
R⁴ représente alkyle comportant de 1 à 12 atomes de C, où, en outre, un ou deux groupes CH₂ non adjacents peut/peuvent être remplacé(s) par -O-, -CH=CH-, -CO-, -OCO- ou -COO- de telle sorte que des atomes de O ne soient pas liés directement les uns aux autres.

9. Milieu LC selon la revendication 7 ou 8, **caractérisé en ce qu'**il comprend additionnellement un ou plusieurs composés choisis parmi le groupe constitué par les formules qui suivent : 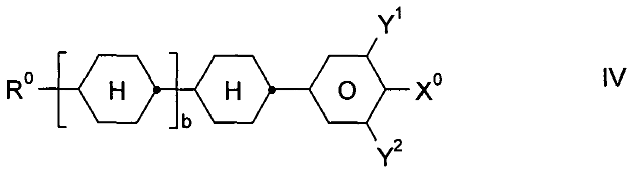 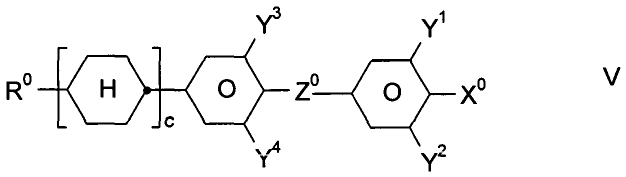 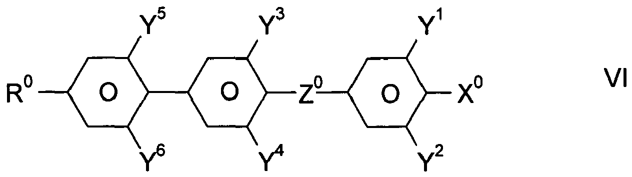 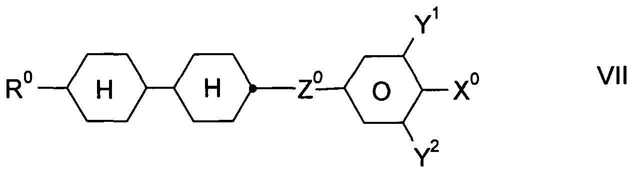 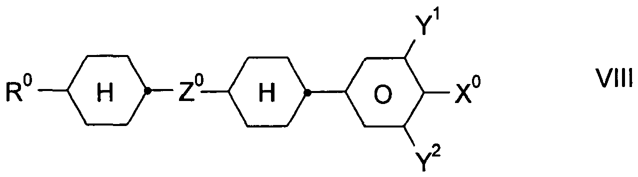 dans lesquelles
R⁰ représente un radical alkyle ou alcoxy comportant de 1 à 15 atomes de C, où, en outre, un ou plusieurs groupes CH₂ dans ces radicaux peut/peuvent chacun être remplacé(s), indépendamment les uns des autres, par -C≡C-, -CF₂O-, -CH=CH-, 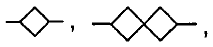 -O-, -CO-O- ou -O-CO- de telle sorte que des atomes de O ne soient pas liés directement les uns aux autres, et où, en outre, un ou plusieurs atomes de H peut/peuvent être remplacé(s) par halogène,
X⁰ représente F, CI, CN, SF₅, SCN, NCS, un radical alkyle halogéné, un radical alkényle halogéné, un radical alcoxy halogéné ou un radical alkényloxy halogéné, chacun comportant jusqu'à 6 atomes de C,
Y¹⁻⁶ représentent, chacun indépendamment des autres, H ou F,
Z⁰ représente -C₂H₄-, -(CH₂)₄-, -CH=CH-, -CF=CF-, -C₂F₄-, -CH₂CF₂-, -CF₂CH₂-, -CH₂O-, -OCH₂-, -(CO)O-, -CF₂O- ou -OCF₂-, dans les formules V et VI également une liaison simple, et
b et c représentent, chacun indépendamment de l'autre, 0 ou 1.

10. Affichage LC contenant un milieu LC ou un ou plusieurs composés selon une ou plusieurs des revendications 1 à 9.

11. Affichage LC selon la revendication 10, **caractérisé en ce qu'**il s'agit d'un affichage MLC, TN, STN ou IPS.

12. Procédé pour la préparation de composés de la formule I selon une ou plusieurs des revendications 1 à 6, comprenant les étapes qui suivent :
a) métallation de 1,4-dihalobenzène dans une position d'halogène,
b) addition du composé organométallique obtenu au niveau de l'étape a) sur un cétone de la formule qui suit : 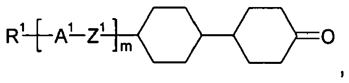
c) élimination de l'eau de l'alcool obtenu au niveau de l'étape b),
d) hydrogénation de l'alkène obtenu au niveau de l'étape c),
e) en option, isomérisation du mélange obtenu au niveau de l'étape d) pour obtenir l'isomère préféré (isomère trans-trans du groupe bicyclohexyle) de la formule qui suit : 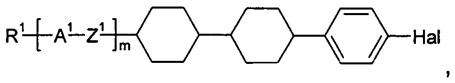
f1) couplage de *Sonogashira* du composé halogène obtenu au niveau de l'étape e) sur un alkyne approprié de la formule HC≡C-Z²-R², dans laquelle R² et Z² présentent les significations indiquées selon la revendication 1,
ou
f2) couplage de *Sonogashira* du composé halogène obtenu au niveau de l'étape e) sur du trialkylsilylacétylène,
g2) désilylation de l'acétylène obtenu au niveau de l'étape f2),
h2) déprotonation de l'acétylène terminal au niveau de l'étape g2) en utilisant une base,
i2) alkylation de l'acétylure obtenu au niveau de l'étape h2) en utilisant un agent d'alkylation, par exemple un iodure d'alkyle de la formule R²-I,
ou
i3) réaction de l'acétylure obtenu au niveau de l'étape h2) avec un haloalkane selon une réaction de *Kumada-Corriu,*
où R¹, A¹ et Z¹ présentent les significations indiquées selon la revendication 1, et Hal représente halogène.
